# EUROPÄISCHE PATENTSCHRIFT

(11) **EP 2 580 525 B1**
(45) Veröffentlichungstag und Bekanntmachung des Hinweises auf die Patenterteilung: **31.08.2016**
(21) Anmeldenummer: 11743419.1
(22) Anmeldetag: 31.05.2011
(51) Int. Cl.: F23J 15/06, F23M 9/00, F22B 37/06, F24H 9/00

(54) **OFENROHR MIT EINSTELLBARER RAUCHGASSTRÖMUNGSEINRICHTUNG**
FLUE HAVING AN ADJUSTABLE EXHAUST FLOW GUIDING UNIT
CHEMINÉE DE FOUR À DISPOSITIF RÉGLABLE D'ÉCOULEMENT DE GAZ DE FUMÉE

(30) Priorität: 10.06.2010 DE 102010023381
(43) Veröffentlichungstag der Anmeldung: 17.04.2013
(73) Patentinhaber: Schmitt, Klaus, 44359 Dortmund (DE)
(72) Erfinder: Schmitt, Klaus, 44359 Dortmund (DE)
(86) Internationale Anmeldenummer: PCT/DE2011/001141
(87) Internationale Veröffentlichungsnummer: WO 2011/153992

(56) Entgegenhaltungen:
- DE-A1- 2 931 232
- DE-A1- 2 938 324
- DE-A1- 2 951 487
- FR-A- 732 557
- JP-A- 60 191 145
- US-A- 1 120 550
- US-A- 4 327 671
- US-A- 4 344 479
- US-A- 4 377 153

## Beschreibung

### Technisches Gebiet

Die Erfindung betrifft eine Vorrichtung zur Wärmeversorgung mittels einer Ofenwärmequelle, welche die Rauchgase über ein im Ofenrohr befindliches und im Betrieb einstellbares Leitblechsystem alternierend umlenkt und die Wärmeenergie effizienter ausnutzt.

Der im Innenbereich eines Rauchgasabzugsrohrs angebrachte Wärmetauscher arbeitet in Verbindung mit dem Leitblechsystem und führt die Wärmeenergie einem Warmwassersystem zu.

Die Speicherung der Wärmeenergie der parallelen Wärmeerzeuger erfolgt mittels Verwendung eines Wärmespeichers, beispielsweise zur Heizung von Gebäuden und / oder zur Warmwassererzeugung aus Trinkwasser.

### Stand der Technik

Die bekannten Kamin -oder Kaminofenanlagen verwenden zur Heizung in Gebäuden Rauchgasströmungseinrichtungen, die über bewegliche oder unbewegliche Hindernisse zur Rauchgasablenkung für die Erzeugung von Rauchgasturbulenzen verfügen.

Es sind verschwenkbare Einsatzelemente für Heizgaszüge bekannt, die aus Gründen einer einfachen Reinigung zur Querschnittsverkleinerung lose und herausnehmbar aufgebaut sind (siehe DE 1 899 898 U: Seite 1, Absatz 1; Seite 2, Absatz 3 und 4 sowie Winkeleinstellungen der Figuren 1 und 2).

Ebenfalls sind Rauchgasleiteinsätze bekannt, die bei der Inbetriebnahme einmalig in einer bestimmten, festen Position anhand den jeweiligen gewünschten betrieblichen Verhältnissen anhand von praktischen Versuchen vor Ort (siehe DE 9 216 274 U1 Seite 4, Absatz 1 sowie Figur 2 mittels Mutter 12) mit einem Werkzeug durch eine Fachkraft verschieblich einstellt werden. Die rechteckigen Leitblechabschnitte sind fest miteinander verschraubt oder verschweißt und liegen einseitig an der Rauchgasrohrwand (Seite 6 Absatz 2) an oder bestehen aus einem Metallstreifen (Seite 10, Absatz 3).
Die US 4 327 671 offenbart eine Vorrichtung zur Übertragung der Wärme aus einer Ofenwärmequelle in einem Rauchgasrohr mittels Leitblechen, die eine turbulente Strömung erzeugen zum Zwecke der Warmwassererzeugung. Der Rauchgasstrom kann über den Rauchgasrohrquerschnitt über mehrere um die eigenen Mittelachsen schwenkbare Leitbleche beeinflusst werden, die im Rauchgasrohr räumlich hintereinander in Längsrichtung angeordnet sind. Je nach Schwenkwinkelstellung der Leichtbleche können die Rauchgase mehr oder weniger umgelenkt werden. Ähnliche Mittel zum Umlenken eines Gasstroms sind auch aus der FR 7 32 557, der US 4 377 153, der US 1 120 554 sowie der US 4 344 479 bekannt. Mittel zum Umlenken des Rauchgasstromes innerhalb eines Wärmetauschers werden auch in der JP 60 191 145 gezeigt. Die DE 2 938 324 A1 schlägt für Ofenrohrwärmetauscher wendelförmige Anordnungen von Rohren vor. Die DE 2 951 487 A1 offenbart einen Abgaswärmetauscher, bei welchem die Rohre des Wärmetauschers nicht wendelförmig verlaufen sondern in Längsrichtung, wobei zwei benachbarte in Längsrichtung verlaufende Rohre über Rohrbögen miteinander verbunden sind, so dass sich insgesamt ein mäanderförmiger Verlauf der Rohrschlange ergibt.

Die bekannten unbeweglichen oder beweglichen Rauchgasströmungseinrichtungen sind nicht variabel einstellbar, während der Ofen heizt bzw. während des laufenden Verbrennungsvorganges.

Die Rauchgasströmungseinrichtungen hängen entweder verbindungslos, ohne von außen zugängliche Einstelleinrichtung im Rauchgasrohr, oder sind mittels interner Verschraubungen durch Fachpersonal für einen Anwendungsfall während der Inbetriebnahme einzustellen, um die gewünschten Betriebsverhältnisse zu berücksichtigen.

Eine händische Einstellung durch den Betreiber oder automatische Einstellung mittels einer Steuerung ist nicht vorgesehen.

Die bekannten beweglichen Rauchgasströmungseinrichtungen verwenden keinen Rauchgasrohrwärmetauscher und sind damit nicht in der Lage, dem Rauchgasrohr zusätzlich Wärmeenergie zu entziehen und einem anderen parallelen Wärmekreis zuzuführen.
Der Erfindung liegt die Aufgabe zugrunde, einen verbesserten Rauchgasrohrwärmetauscher aufzuzeigen, der eine längere Verweildauer der Rauchgase im Rauchgasrohrwärmetauscher ermöglicht.

Die erfinderische Vorrichtung wird im Anspruch 1 beschrieben und ermöglicht eine variable Einstellung der Rauchgasströmung während des Ofenbetriebes bzw. während dessen der Ofen heizt.

Der Rauchgasstrom wird durch mehrere um die eigenen Mittelachsen schwenkbare Leitbleche eingestellt, die im Rauchgasrohr räumlich hintereinander in Längsrichtung angeordnet sind und in Abhängigkeit der alternierenden Schwenkwinkel von Leitblech zu Leitblech umgelenkt werden. Die Umlenkung erfolgt in einer mehr oder weniger ausgeprägten Schlangenlinienform, je nach Einstellung der Leitblechwinkeleinstellung. Die Umlenkung erfolgt maximal über den gesamten Rauchgasrohrquerschnitt.

Die Erzeugung der schlangenlinienförmigen Umlenkung der Rauchgase erforderlichen alternierenden schwenkbaren Leitbleche wird vorzugsweise dadurch ermöglicht, dass eine Verbindungsstange zur mechanischen Verbindung der Drehhebel an den jeweils gegenüberliegende Drehpunkten der Drehhebel angebracht wird, die derart miteinander verbunden eine synchrone Leitblechwinkeleinstellung ermöglicht, jedoch mit umgekehrten Winkelvorzeichen von einem Leitblech zum nächsten.

Ein vollständig vom Rauchgas umströmter Wärmetauscher, der zwischen den schwenkbaren Leitblechen und der inneren Rohrwand des Rauchgasabzugsrohres ebenfalls in Längsrichtung des Rauchgasrohres angeordnet ist, überträgt die Wärmeenergie in ein Warmwassersystem, verstärkt die turbulente Strömung und verfügt aufgrund der Integration innerhalb des Rauchgasabzugsrohres über eine große Wärmetauscheroberfläche.

Zur Aufnahme der schwenkbaren Leitbleche beinhaltet der Rohrwärmetauscher einen inneren Hohlkörperbereich als Strömungsraum innerhalb dessen die hintereinander angeordneten Leitbleche geschwenkt werden können.

Ein elektromotorisch betriebener Ventilator wird zur Verstärkung der Rauchgasströmung oder zur Regulierung der Sauerstoffzufuhr vorzugsweise im Zuluftbereich in Verbindung mit den schwenkbaren Leitblechen und deren strömungshemmenden Wirkung eingesetzt.

Die Aktivierung des Ventilators erfolgt in Abhängigkeit der gewünschten Wärmeleistung des Ofenrohrwärmetauschers und/oder der gewünschten Strömungsgeschwindigkeit im Rauchgasrohr und /oder der Temperatur im oder am Rauchgasrohr mittels der Steuerung oder mittels einer Handbedienung.

Der erfinderische Nutzen ermöglicht eine von den jeweils aktuellen Betriebsbedingungen abhängige variable Einstellbarkeit der Verbrennung. Dabei wird zum einen die Sauerstoffzufuhr mittels der Ventilation als Regelgröße genutzt und zum anderen der Rauchgasstrom mittels der Schwenkwinkeleinstellung mehr oder weniger turbulent oder gehemmt, so dass sich im Brennraum höhere Temperaturen in Folge der längeren Verweildauer der Rauchgase einstellen.

Jeder parallele Wärmekreis verfügt im flüssigen Strömungsraum zur Wärmeübertragung in den Wärmespeicher über ein eigenes, durch die Steuerung unabhängig aktivierbares und einstellbares Stellglied, dass vorzugsweise aus einer Umwälzpumpe besteht.

Mittels der jedem Wärmekreis zugehörigen Durchflussmengenbegrenzer lassen sich die Medienkreiswiderstände bzw. Medienfließgeschwindigkeiten für jeden Wärmekreis separat händisch oder automatisch einstellen.

Die Verwendung der Wärmeträgerflüssigkeiten Wasser oder Solarflüssigkeit ist für den flüssigen Medienbereich im Ofenrohrwärmetauscher und den anderen parallelen Wärmekreisen vorgesehen.
Fig. 1: Integrierter Ofenrohrwärmetauscher, der nicht Teil der Erfindung ist, mit einstellbarer Rauchgasströmungseinrichtung als parallel gekoppelter Wärmeerzeuger
Fig.2: Schwenkbare Leitbleche einschließlich der mechanischen Verbindungselemente zur synchronen Leitblechwinkeleinstellung
Fig.3: Schnittzeichnungen durch das Rauchgasabzugsrohr bei der Leitblechwinkeleinstellung 0° und 90°
Fig.4: Ofenrohrwärmetauscher, Ausführung mit innen eingesetzter Rohrspirale
Fig.5: Beispielhafte Darstellung einer durch Leitbleche verursachte Beeinflussung der Rauchgasströmung
Fig.6: Ofenrohrwärmetauscher, Ausführung mit innen eingesetzten Wassermantelwärmetauscher
Fig.7: Rohrstabwärmetauscher mit Vorlauf -und Rücklaufhohlring
Fig.8: Rohrstabwärmetauscher mit 180° Rohrwinkeln in Schlaufenform
Fig.9: Leistungsvergleich Rohrmantelwärmetauscher mit / ohne Rauchgasumlenkung und Ventilation
Fig.10: Leistungsregelung mit Stellgröße Ventilator

### Arten der Wärmekreise

Als Ausführungsbeispiel zur Wärmeübertragung zum Zwecke der Heizung und Warmwassererzeugung dient eine thermische Solaranlage, die durch eine parallel angekoppelte Kaminofenanlage ergänzt wurde. Es handelt sich um die Anwendung zweier diskontinuierlich arbeitender Wärmequellen. Weder die Solaranlage (1) noch die Kaminofenanlage (2) sind energetisch permanent verfügbar bzw. dauernd in Betrieb. Erst bei hinreichender Verfügbarkeit werden sie zusätzlich als Ergänzung zu einer kontinuierlich arbeitenden Wärmequelle, dem Grundsystem genutzt. Das Grundsystem oder auch Primärsystem genannt, ist im Gegensatz dazu permanent verfügbar, arbeitet völlig autark, so dass die parallelen Wärmekreise den Energiebedarf des Grundsystems im Ausführungsbeispiel reduzieren.

Es sind Ausführungsarten möglich, die die Kaminofenanlage (2) als Grundsystem verwenden.

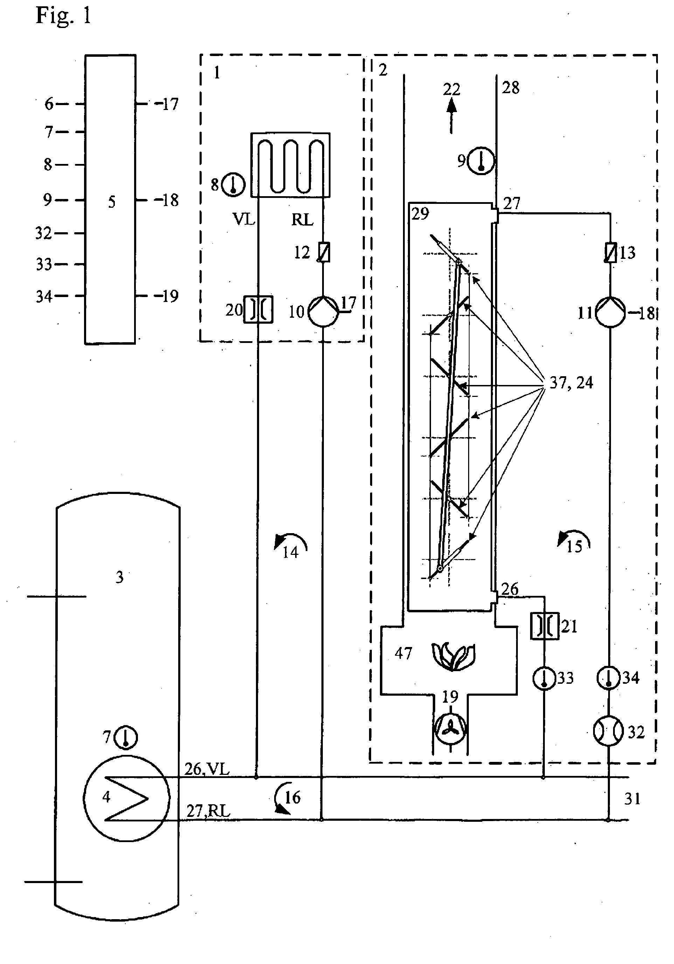

Die Solaranlage dient im Ausführungsbeispiel als Wärmequelle für den Parallelwärmekreis 1 (1) und die Kaminofenanlage als Ofenwärmequelle für den Parallelwärmekreis 2 (2). Die parallel gekoppelten Wärmekreise versorgen einen Wärmetauscher (4), der einen Warmwasserspeicher bzw. Wärmespeicher (3) mit Wärmeenergie versorgt. Der Wärmespeicher (3) wird sowohl für die Warmwassererzeugung als auch zur Heizungsunterstützung eingesetzt. Fig.1 zeigt die Gesamtanordnung der parallel gekoppelten Wärmekreise (1, 2) einschließlich der erfindungsrelevanten Komponenten und Funktionen. Es wurde auf die Darstellung der Komponenten der realen Anlage verzichtet, die der Anlagensicherheit und der betrieblichen Wartung dienen. Sowohl für die Solaranlage wie auch für die Erweiterung der Kaminofenanlage, wurden die folgenden Komponenten zusätzlich verwendet jedoch nicht dargestellt:
- 2 mechanische Temperaturanzeigen
- Mechanisches Manometer zur Druckanzeige
- Handbetätigte Absperrventile
- Überstromventil mit Abblasung bei Überdruck
- Anschluss für einen Überdruckspeicher
- Überdruckspeicher
- Befüllpumpe
Das Entlüftungsventil (30) wird an der höchsten Stelle des Wärmekreises (2) entweder im inneren oder äußeren Bereich des Ofenrohrwärmetauschers (29) angebracht. Die erforderlichen Werte der Hysteresen zur sicheren Einschaltung und Ausschaltung der jeweiligen Stellglieder sind in der Ausführungsbeschreibung und in den Patentansprüchen nicht erwähnt, gehören jedoch zur praktischen Ausführung aller realen Anwendungen.

### Funktionsprinzip: Integrierter Ofenrohrwärmetauscher mit schwenkbaren Leitblechen

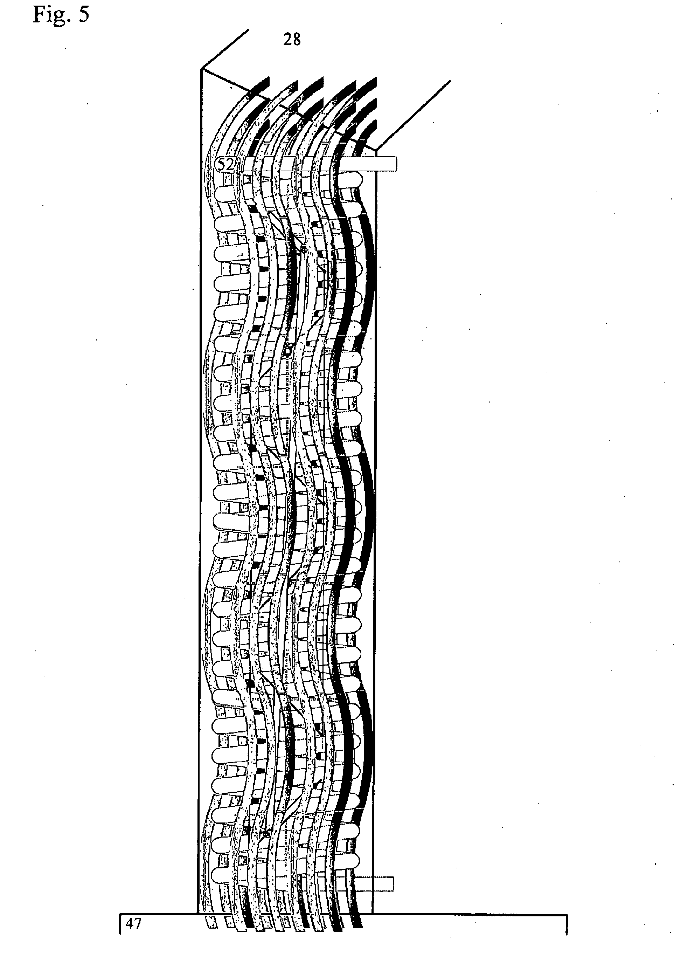

Im Ausführungsbeispiel erfolgt die Wärmeübertragung der Kaminofenanlage über einen Ofenrohrwärmetauscher (29), der die Rauchgase (22) der Ofenwärmequelle (2) durch seine Hohlkörperform und dem integrierten Einbau im Rauchgasabzugsrohr (28) sowohl im inneren gasförmigen Medienraum als auch im äußeren gasförmigen Medienraum des Ofenrohrwärmetauschers (29) ausnutzt. Der innere gasförmige Medienraum wird nachfolgend als innerer Hohlkörperbereich (44) und der äußere gasförmige Medienraum wird nachfolgend als äußerer Hohlkörperbereich (45) bezeichnet. Im inneren Hohlkörperbereich (44) sind vorzugsweise 6 schwenkbare Leitbleche (37) räumlich hintereinander in Längsrichtung des Rauchgasrohres (28) derart angeordnet, dass die durchströmenden Rauchgase (22) zwangsweise geführt und abgelenkt werden. Je nach Schwenkwinkeleinstellung (24) der Leitbleche (37) erfolgt eine mehr oder weniger starke Ablenkung der Rauchgasströmung (22). Die Winkeleinstellung (24) der schwenkbaren Leitbleche (37) erfolgt mittels der Betätigung eines zugehörigen Drehhebels (35 oder 36) um die Wellenachse der Leitbleche (37) in einem wirksamen Drehwinkelbereich von 0° bis 90°, so dass bei aufsteigenden Winkelgraden (24) der wirksame Flächenquerschnitt zur ungehinderten Rauchgasströmung (22) zunimmt. Durch den radialen Schwenkvorgang der Leitbleche (37) ergibt sich bei steigenden Schwenkwinkeln (24) aus der Position 0° in Richtung 90° ein größer werdender Flächenquerschnitt für die wirksame Rauchgasströmung im inneren Hohlkörperbereich (44). In umgekehrter Richtung bewirken kleiner werdende Schwenkwinkel (24) kleinere Flächenquerschnitte, die die Rauchgasströmung (22) zwangsweise umlenken und hemmen, so dass sich bei kleiner werdenden Schwenkwinkeln (24) der Leitbleche eine stärkere turbulente Strömung innerhalb des inneren und äußeren Hohlkörperbereichs (44,45) einstellt wie in Fig.5 schematisch dargestellt ist. Die turbulente Rauchgasströmung erzeugt eine höhere Reibung im gesamten gasförmigen Ofenrohrwärmetauscherbereich (44, 45), welche den Wirkungsgrad der Wärmeübertragung deutlich verbessert.

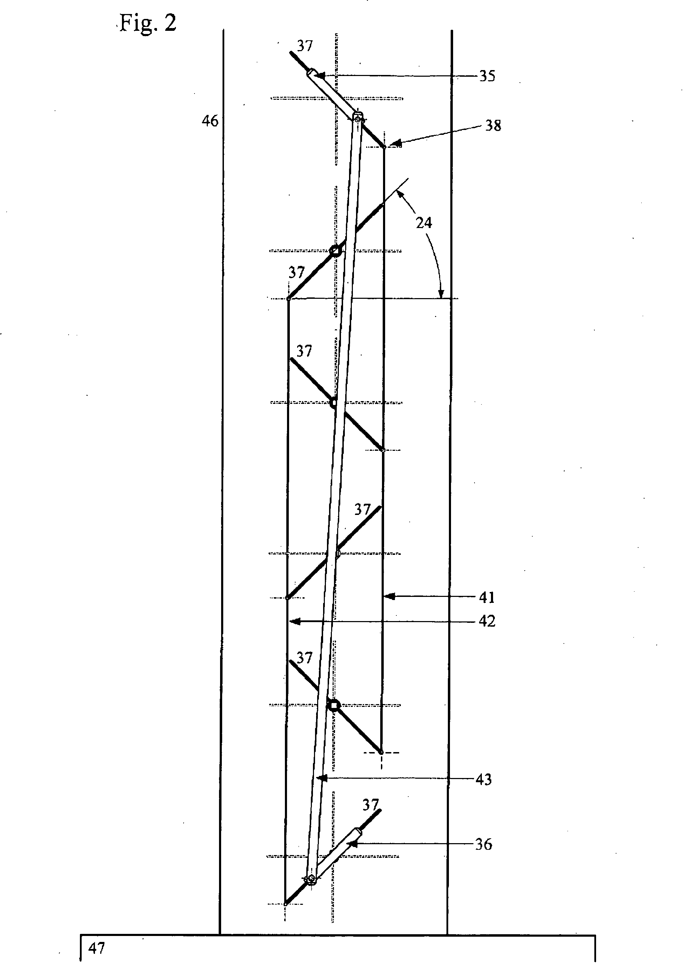

Die im Ausführungsbeispiel gemäß Fig.2 verwendeten Leitbleche (37) werden zur gezielten und gemeinsamen Einstellbarkeit mechanisch miteinander verbunden.

Eine erste mechanische Verbindung wird mittels einer Schwenkhebelstange 1 (41) wie in Fig.2 dargestellt, welche drei schwenkbare Leitbleche (37) derart miteinander verbindet, dass sich durch Betätigung des Drehhebels 1 (35) gleiche Schwenkwinkel (24) infolge des synchronen Bewegungsablaufs dieser mechanisch miteinander verbundenen Leitbleche (37) einstellen. Hierfür benötigt jedes zweite zu verbindende Leitblech (37) beginnend mit dem 1. Leitblech, gefolgt mit dem 3. Leitblech und endend mit dem 5. Leitblech in Längsrichtung des Rauchgasabzugsrohrs (28) je ein mechanisches Scharnier mit Drehpunkt (38) je Leitblech (37), welches mit der Schwenkhebelstange 1 (41) mechanisch verbunden ist.

Eine zweite mechanische Verbindung wird mittels einer weiteren Schwenkhebelstange 2 (42) wie in Fig.2 dargestellt, welche drei schwenkbare Leitbleche (37) miteinander verbindet, dass sich durch Betätigung des Drehhebels 2 (36) gleiche Schwenkwinkel (24) infolge des synchronen Bewegungsablaufs dieser mechanisch miteinander verbundenen Leitbleche (37) einstellen. Hierfür benötigt jedes zweite zu verbindende Leitblech (37) beginnend mit dem 2. Leitblech, gefolgt mit dem 4. Leitblech und endend mit dem 6. Leitblech in Längsrichtung des Rauchgasabzugsrohrs (28) je ein mechanisches Scharnier mit Drehpunkt (38) je Leitblech (37), welches mit der Schwenkhebelstange 2(42) mechanisch verbunden ist.

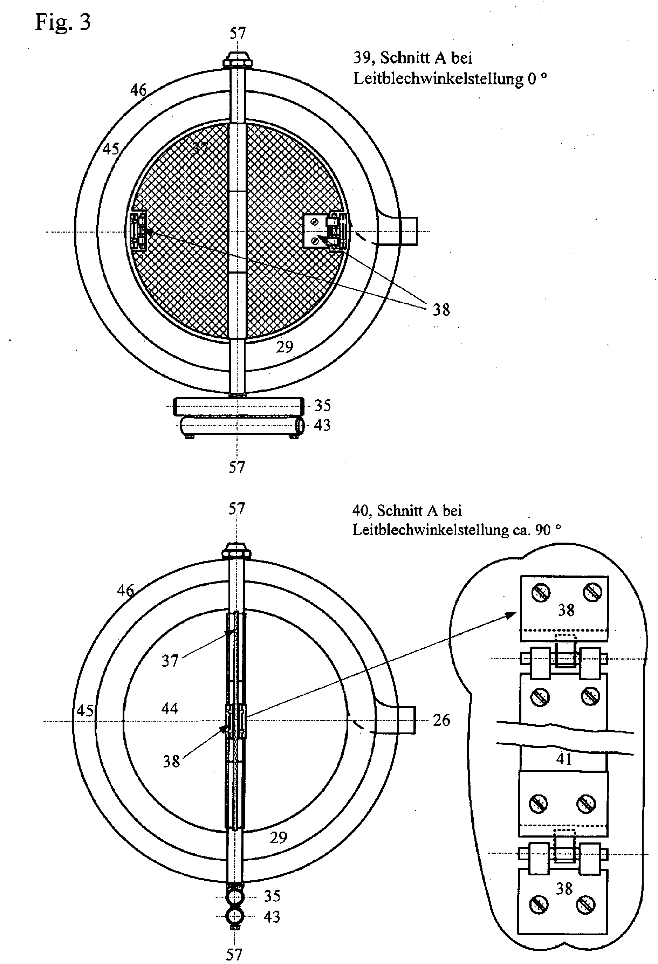

Die beiden Schwenkhebelstangen (41, 42) werden räumlich gegenüberliegend auf der rechten Seite und der linken Seite im äußeren Bereich der Leitbleche (37) in Bezug zu deren Drehachse wie in Fig.2 dargestellt angeordnet. Die zugehörige Darstellung der Fig.3 zeigt im Schnitt A bei der Leitblechwinkelstellung 0° die rechts -und linksseitig angebrachten Scharniere (38) zweier Leitbleche (37) mit einer vorzugsweise mechanisch ausgeführten Verbindung der Schwenkhebelstange 1 (41) und Schwenkhebelstange 2 (42) mit den Scharnieren (38). Die Leitblechwinkelstellung 90° (39) zeigt einen nahezu vollständig geöffneten inneren Hohlkörperbereich (44). Der Schnitt A bei der Leitblechwinkelstellung 0° (40) der Fig.3 hingegen zeigt einen nahezu vollständig geschlossenen inneren Hohlkörperbereich (44).

Durch eine Verbindungsstange (43), welche die zwei Drehhebel (35 und 36) diagonal drehbar mechanisch miteinander verbindet, wird eine entgegen gesetzte jedoch synchrone Bewegungsrichtung der zwei Schwenkhebelstangen 1 und 2 (41, 42) erreicht. Dadurch ergeben sich von einem Leitblech (37) zum nächsten gleiche Beträge der Schwenkwinkel (24) mit entgegen gesetzten Winkelvorzeichen. Durch die synchrone Schwenkwinkeleinstellung der Leitbleche (37) ergibt sich auch bei verschiedenen Schwenkwinkeln (24) in Längsrichtung der Rauchgasströmung (22) betrachtet, eine nahezu gleiche Strömungsverteilung in Medienflussrichtung. Infolge der mechanischen Kopplung mittels der mechanischen Verbindungselemente (41, 42 und 43), resultiert ein maximaler Schwenkwinkelbereich (24) der Leitbleche von ca. -90° bis +90°.

Da bei der Leitblechwinkeleinstellung von -90° bzw. 90° wie in Fig.3 Abbildung (40) dargestellt, der größtmögliche Flächenquerschnitt zur Rauchgasströmung vorliegt, ist diese Winkeleinstellung (24) besonders zur Reinigung der Ofenrohrwärmetauscherelemente geeignet und des Weiteren eine günstige Winkeleinstellung für den Anheizvorgang der Ofeneinrichtung (47).

Es sind Ausführungsarten möglich, bei denen weniger oder mehr als 6 Leitbleche eingesetzt werden. Ebenso kann auch vollständig oder teilweise auf eine mechanische Kopplung zur synchronen Winkeleinstellung verzichtet werden.

### Ausführungsarten der Ofenrohrwärmetauscher

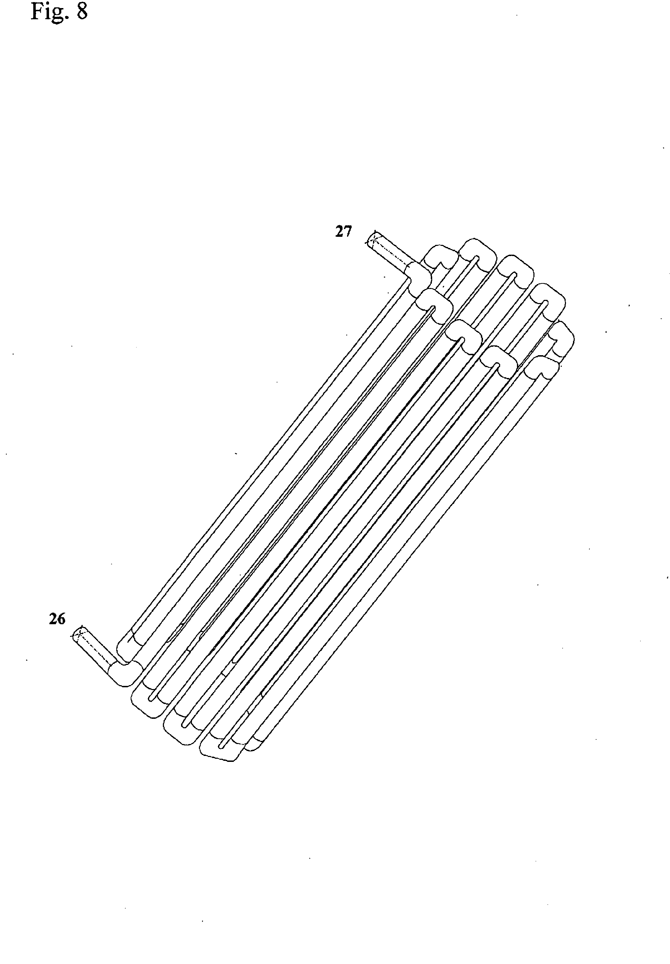

Der im Ausführungsbeispiel verwendete Ofenrohrwärmetauscher (29) besteht aus mehreren Stahlrohrstäben, die durch Verwendung mehrerer 180°-Rohrwinkel wie in Fig.8 dargestellt, miteinander verbunden werden. Die Anordnung wird vollständig durch das gasförmige Wärmeträgermedium, ähnlich wie in Fig.5 dargestellt, umströmt. Die räumliche Anordnung der Rohrstäbe sowie der zugehörigen Rohrwinkel erfolgt schlaufenförmig, so dass sich innerhalb des Rauchgasrohres (28) ein rund geformter Hohlkörper ergibt. Der innere Hohlkörperbereich (44) bietet den notwendigen Raum zur Aufnahme der schwenkbaren Leitbleche (37) und verfügt am Rohranfang über die Rücklaufanschlussmuffe (27). Am entgegen gesetzten Rohrende befindet sich die Vorlaufanschlussmuffe (26). Das zur Wärmeübertragung notwendige flüssige Wärmeträgermedium wird dem Ofenrohrwärmetauscher über die Anschlussmuffen (27, 26) zugeführt. Die Rauchgase umströmen die innerhalb des Rauchgasrohres (28) befindliche Rohrschlaufe der Fig.8 vollständig, so dass sich zur Wärmeübertragung eine vergrößerte Wärmetauscheroberfläche ergibt. Die vergrößerte Wärmetauscheroberfläche ermöglicht einen optimalen Wärmeübergang vom gasförmigen in den flüssigen Wärmetauschermedienbereich.

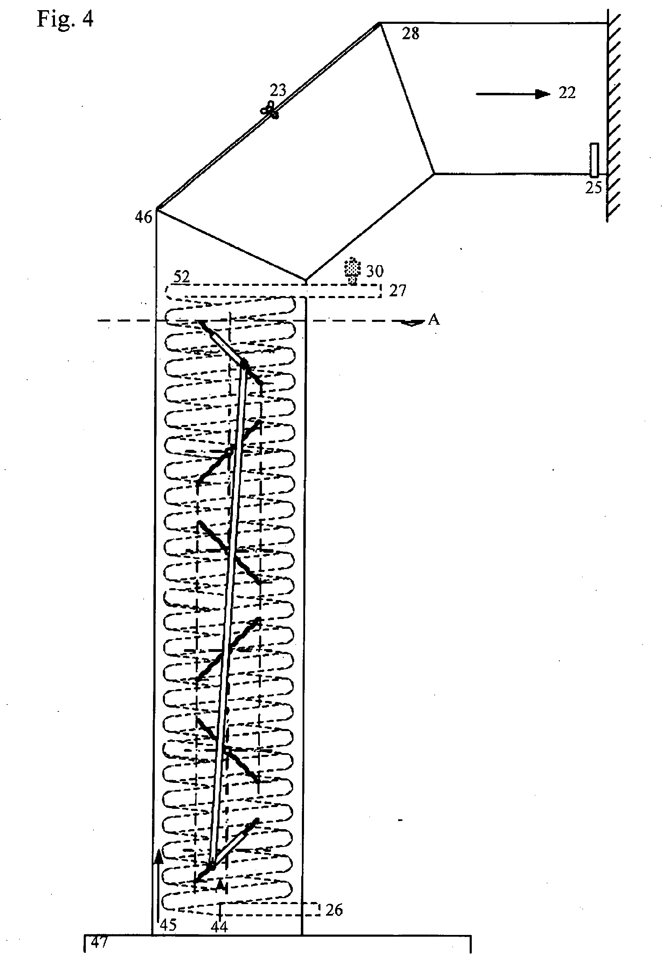

Ausführungsart Ofenrohrwärmetauscher mit spiralförmig ausgebildeter Rohrschlange:
Der integrierte Ofenrohrwärmetauscher (29) kann als weitere effektive Ausführungsart durch eine kreisrund geformte Rohrspirale (52), wie in Fig.4 dargestellt, ausgeführt sein. Die räumliche Anordnung des von Windung zu Windung geformten Rohres erfolgt vorzugsweise mit einem ausreichend großen Luftspalt von vorzugsweise mindestens 5mm, so dass sich innerhalb des Rauchgasabzugsrohres ein rund geformter Hohlkörper ergibt. Der innere Hohlkörperbereich (44) bietet den notwendigen Raum zur Aufnahme der schwenkbaren Leitbleche (37) und verfügt am Rohranfang über die Rücklaufanschlussmuffe (27). Am entgegen gesetzten Rohrende befindet sich die Vorlaufanschlussmuffe (26). Das zur Wärmeübertragung notwendige flüssige Wärmeträgermedium wird dem Ofenrohrwärmetauscher (29) über die Anschlussmuffen (27, 26) zugeführt.

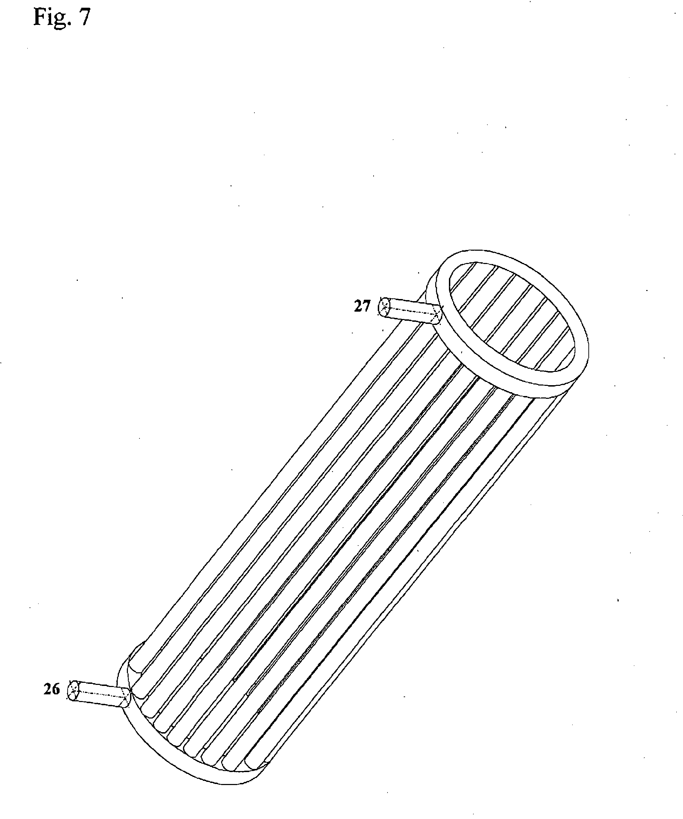

Ausführungsart Rohrstabwärmetauscher mit Vorlauf -und Rücklaufhohlring:
Des Weiteren ist eine Wärmetauscherausführung mittels zweier Hohlringe, wie in Fig.7 dargestellt, zur Verbindung der Rohrstangen vorgesehen, wobei an dem ersten Hohlring die Anschlussmuffe für den Vorlauf (26) und an dem zweiten Hohlring die Anschlussmuffe für den Rücklauf (27) angebracht ist. Der Wärmetauscher ist als Hohlkörper mit integrierten Leitblechen (37) ausgeführt, durch dessen inneren Hohlkörperbereich (44) und den äußeren Hohlkörperbereich (45) ebenso das Rauchgas (22) strömt.

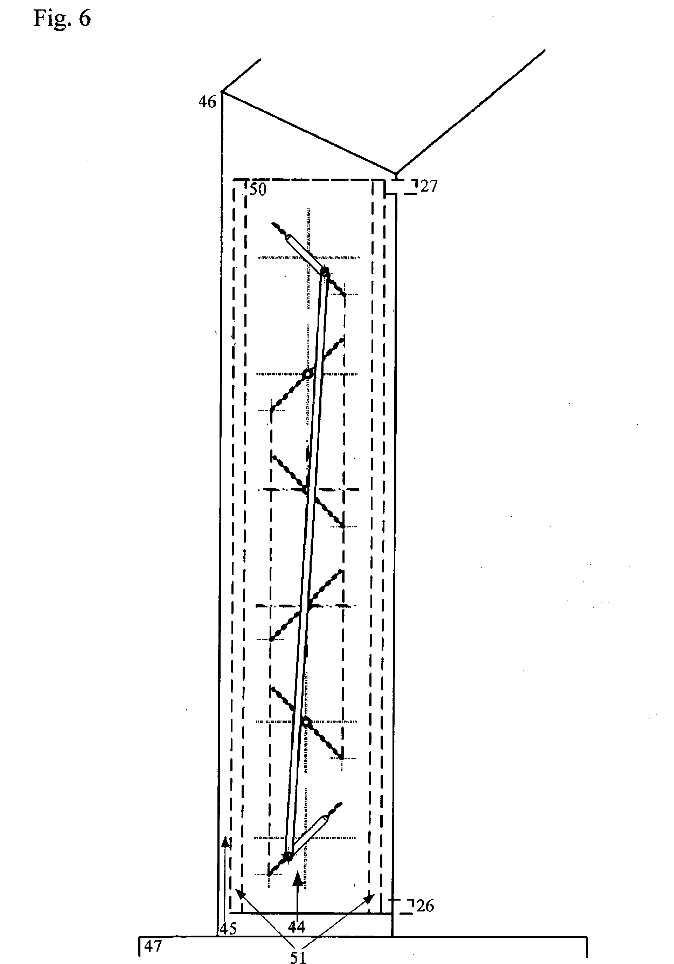

Ausführungsart Flüssigkeitsmantelwärmetauscher:
Eine weitere Ausführungsart von Ofenrohrwärmetauschern (29) ist vorgesehen, die über einen Flüssigkeitsmantel (51) zwischen zwei innen im Rauchgasabzugsrohr (28) angebrachten Mantelrohren verzügen, durch welche die Wärmeträgerflüssigkeit fließt und dass zwischen der äußeren Mantelrohrfläche und der Innenfläche des Rauchgasabzugsrohres ein Luftspalt zur Rauchgasführung (45) besteht. Der Wärmetauscher ist ebenfalls als Hohlkörper mit integrierten Leitblechen (37) ausgeführt, durch dessen inneren Hohlkörperbereich (44) ebenso das Rauchgas (22) strömt. Die Fig.6 zeigt den Flüssigkeitsmantelwärmetauscher (50).

### Befestigung der Ofenrohrwärmetauscher

Die mechanische Befestigung des Ofenrohrwärmetauschers (29) mit dem Rauchgasabzugsrohr (28) erfolgt vorzugsweise an den Durchführungen der Anschlussmuffen (26,27), die durch zwei Bohrungen geführt werden, welche sich im Außenblech (46) des Rauchgasabzugsrohrs (28) befinden. Die Anschlussmuffen (26 und 27) werden insbesondere zur Befestigung an dem Außenblech des Rauchgasabzugsrohrs über den gesamten Muffenumfang befestigt.

Mechanische Verbindungen der Wärmetauscherkomponenten
Die mechanische Anbringung der Vorlauf -und Rücklaufanschlussmuffen, der Rohrstangen an den Rohrwinkeln oder Hohlringen wie in Fig.4, Fig.6, Fig.7 und in Fig.8 dargestellt, erfolgt vorzugsweise mittels Schweißverbindungen oder Hartlotverbindungen.

Reinigung Ofenrohrwärmetauscher und Leitbleche:
Im Ausführungsbeispiel der Fig.2 verfügt das Rauchgasabzugsrohr (28) im Bereich des 90° Winkelrohres über eine großflächige Reinigungsöffnung (23), durch die hindurch mit einer Reinigungsbürste, die Oberflächen der Leitbleche (24), die Innenfläche des Rauchgasabzugsrohres (28) und der innere Bereich des Außenbleches (46) händisch gereinigt werden können. Die Rußentfernung erfolgt dabei durch das Hinein -und Herausführen der Reinigungsbürste im Rahmen der nötigen Reinigungsintervalle. Die Reinigungsbürste verfügt über einen Stiel, der vorzugsweise hinsichtlich seiner Länge, in stufigen Schritten oder stufenlos veränderbar ist, so dass zwischen der Reinigungsöffnung und der Raumdecke ein genügend größer Freiraum besteht, um die Reinigungsbürste über den gesamten Innenflächenbereich von der Reinigungsöffnung bis zum Ofen (47) vollständig in Längsrichtung zu verwenden. Der abnehmbare Deckel zum Verschließen der Reinigungsöffnung lässt sich vorzugsweise mittels einer Schraubverbindung vom Rauchgasabzugsrohr lösen oder befestigen.

Strukturierte Oberflächen erzeugen zusätzliche Turbulenzen:
Die Verwendung von strukturierten oder rauen Metalloberflächen für das Rauchgasabzugsrohr (28), dem Ofenrohrwärmetauscher (29) und der schwenkbaren Leitbleche (37) erzeugen eine höhere Reibung der Rauchgasströmung (22) während des Medientransportes im gasförmigen Strömungsraum sowie an den Medienübergangsflächen und verbessern die Wärmeübertragung vom gasförmigen zum flüssigen Medium schon bei geringen Volumenströmen. Strukturierte Oberflächen erhöhen dadurch den Wirkungsgrad des Ofenrohrwärtnetauschers (29). Die höhere Reibung entsteht durch Turbulenzen, die wiederum aus unterschiedlichsten internen Rauchgasströmungsrichtungen und deren Verwirbelungen entstehen. Insbesondere bieten sich Metalloberflächen an, die aus Tränenblechen oder Wabenblechen bestehen.

### Ventilation zur Verstärkung der Rauchgasströmung

### Ausführungsbeispiel mit Rohrventilator im Zuluftbereich

Es wird ein elektromotorisch betriebener Ventilator (19) zur Verstärkung der Rauchgasströmung (22) bzw. deren Regulierung in Verbindung mit den schwenkbaren Leitblechen (37) und deren strömungshemmende Wirkung eingesetzt. Der Ventilator ist nicht Teil der Erfindung. Der Ventilator ist als Rohrventilator ausgeführt. Der Einsatz im Zuluftbereich des Ofens (47), bei dem der Ventilator (19) die zur Verbrennung notwendige Zuluft in den Verbrennungsraum drückt, ist als preiswerte und effiziente Lösung sinnvoll, falls der Ofen (47) über einen separaten Anschluss zur Einbringung der Zuluft verfügt. Der Ventilator (19) wird vor dem Öffnen der Ofentür während des Anheizvorganges automatisch mittels der Steuerung (5) oder von Hand abgeschaltet, damit infolge eines möglichen Luftüberdrucks keine Rauchgase oder Schmutzpartikel aus dem Feuerungsraum entweichen können.

### Ventilator im Automatikbetrieb, Schwenkwinkeleinstellung der Leitbleche von Hand

Im Ausführungsbeispiel erfolgt die Einschaltung bzw. Ausschaltung des Ventilators (19) automatisch mittels einer Steuer-und Regeleinheit (5), die als Steuerung (5) bezeichnet wird. Die Ein -und Ausschaltung des Ventilators (19) erfolgt in Abhängigkeit der aktuell vorliegenden Ofenrohrwärmetauschertemperatur (9). Die schwenkbaren Leitbleche (37) werden automatisch durch die Steuerung in eine optimale Betriebsstellung gebracht und bei Bedarf in eine Anfachstellung oder Reinigungsstellung geschwenkt.

Ventilatordrehzahl und Schwenkwinkeleinstellung im Anfachbetrieb:
In der Praxis hat sich als vorteilhaft erwiesen, dass beim Anfachen des Ofens im kalten Zustand der optimale Schwenkwinkel (24) der Leitbleche (37) bei ca. 90° einzustellen ist und die Ventilatordrehzahl im oberen Sollwertbereich liegen sollte, damit der Verbrennungsvorgang möglichst zügig und bei schwacher Rauchgasentwicklung stattfindet. Dabei fördert die einstellbare Ventilatordrehzahl eine Reduzierung der Rauchgasentwicklung und damit eine geringere Umweltbelastung.

Optimaler Schwenkwinkel im Heizbetrieb
In der Praxis hat sich ebenfalls als vorteilhaft herausgestellt, dass die Winkeleinstellung der Leitbleche (24) bei angeheiztem Ofen auf einen optimalen Schwenkwinkel von vorzugsweise ca. +/-45° eingestellt wird, um eine optimale Verbrennung und Verbrennungsleistung zu erzielen. Dieser Schwenkwinkel stellt eine günstige Betriebsstellung dar.

### Nutzung der Ventilatorfunktion ab einer minimalen Grenztemperatur

Der Ventilator (19) ist vorzugsweise nur dann mittels der Steuerung (5) automatisch einzuschalten, wenn der Temperaturistwert (9) im räumlichen Bereich der Messtasche (25) eine von der Anwendung abhängige, parametrierbare oder berechnete, minimale Ofenwärmetauschertemperatur insbesondere 50°C übersteigt. Unterhalb dieser Temperaturgrenze liefert der Ofenrohrwärmetauscher (29) keine ausreichend nutzbare Wärmeenergie. Die berechnete Einschalttemperatur ergibt sich aus der Wärmespeichertemperatur (7) zuzüglich einer Temperaturhysterese, die konstant oder vorzugsweise als veränderbare Größe vorgegeben werden kann.

Mittels der Ventilation (19) wird die Grundlage geschaffen, dass in Kombination mit dem Einsatz der integrierten schwenkbaren Leitbleche (37) eine gezielte Einstellung der Rauchgasströmungsgeschwindigkeit (22), der resultierenden Verbrennungsleistung des Ofens (47) und des Ofenrohrwärmetauschers (29) erreicht wird. Dabei wird der Wirkungsgrad des Ofenrohrwärmetauschers (29) anhand eines günstigen, anlagenabhängigen Leistungsbereichs optimiert, da mittels der einstellbaren Rauchgasströmungsgeschwindigkeit (22) die Verbrennungsleistung in bestimmten Grenzen konstant gehalten wird, jedoch längstens so lange, wie der notwendige Brennstoff im Verbrennungsraum vorhanden ist bzw. rechtzeitig infolge des fortgeschrittenen Abbrands nachgelegt wird.

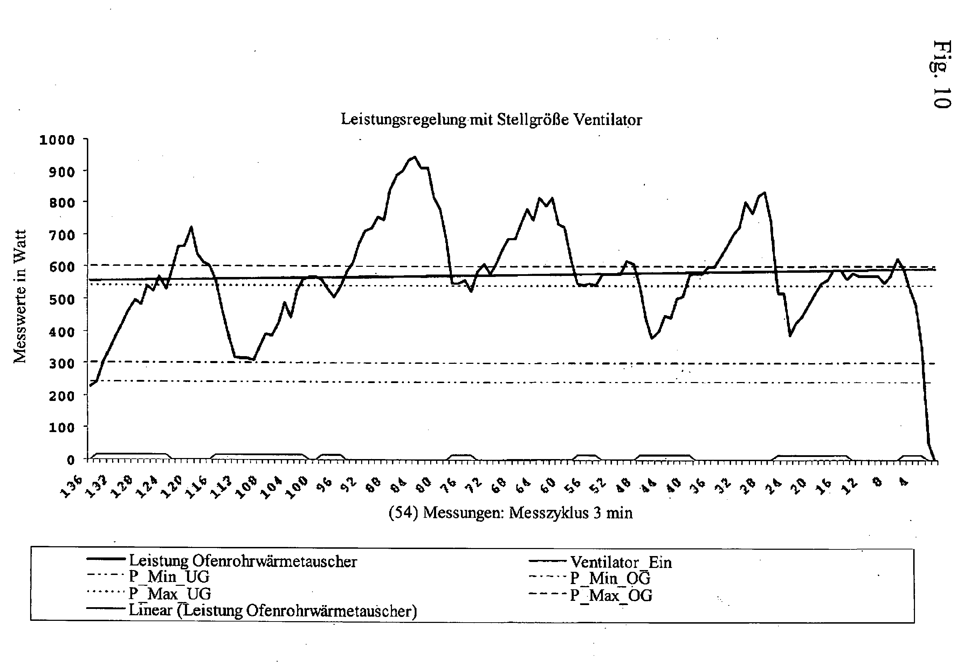

Automatische Regelung der Ofenrohrwärmetauscherleistung mit der Stellgröße
Im Ausführungsbeispiel, das nicht Teil der Erfindung ist, wird die Drehzahlstellgröße für den Ventilator (19) in Abhängigkeit der gewünschten Ofenrohrwärmetauscherleistung, wie es als Beispiel in Fig.10 dargestellt ist, in stufigen Schritten durchgeführt. Der mittels der Steuerung (5) automatisch angesteuerte Ventilator (19) wird in Abhängigkeit der als Sollwert vorgegebenen und der aus dem Leistungsistwert ermittelten Regeldifferenz der Ofenrohrwärmetauscherleistung eingestellt. Die Regelung arbeitet derart, dass die Drehzahlstellgröße bei zu kleiner Wärmetauscherleistung erhöht wird und in umgekehrter Richtung bei zu hoher Wärmetauscherleistung die Drehzahlstellgröße entsprechend reduziert wird.

Ventilatorsteuerung im Handbetrieb oder mit Automatikbetrieb kombiniert:
In einer weiteren Ausführungsart kann der Ventilator im Handbetrieb mittels stufig oder stetig einstellbarer Geschwindigkeit angesteuert werden. Die Aktivierung des Ventilators (19) mit konstanter Drehzahl oder variabler Drehzahleinstellung erfolgt in diesem Fall anhand der Erfahrungswerte des Betreibers. Ebenso können die Ausführungsarten Hand -oder Automatikbetrieb bei Bedarf händisch ausgewählt und damit kombiniert werden. Ein Handbetrieb kann sinnvoll sein, wenn man den höheren Aufwand einer Regelung vermeiden möchte oder falls die Stellgliedwirksamkeiten der automatischen Regelung nicht gegeben sind. Der Fall kann eintreten, falls z.B. zu viel oder zu wenig Brennstoff aufgelegt wurde oder die Ofentür zum Feuerungsraum während des Ofenbetriebes geöffnet ist und dadurch die Regelung nicht optimal wirken kann.

Weitere Ausführungsarten und Einbauorte der Ventilation:
Der seitliche Einbau am Ofenrohr -oder im Schornsteinbereich als Injektor-Ventilator (19) erscheint sinnvoll, da hierbei der Ventilator (19) zusätzliche Luft in den Rauchgasabzugsbereich drückt und dabei das Rauchgas aus dem Ofen (47) mitreißt.

Der Einbau im Rauchgasabzugsrohr, vorzugsweise wegen der niedrigeren Temperaturen möglichst weit vom Feuerungsraum entfernt, ist ebenso möglich.

Des Weiteren kann der Ventilator (19) auf dem Schornstein als Kaminhutventilator angebracht werden.

### Weitere Ausführungsarten der Ofenrohrwärmetauscherregelungen und deren Kombinationen

Regelung der Strömungsgeschwindigkeit mit der Stellgröße Ventilatordrehzahl:
Bei Ausführungsarten, die nicht Teil der Erfindung sind und die eine definierte Strömungsgeschwindigkeit benötigen, ist vorzugsweise die Ausführungsart mit der Stellgröße Ventilatordrehzahl zu wählen. Eine mögliche Anwendung in Kombination mit einer Einrichtung zur Reduzierung von Rußpartikeln bei Öfen erscheint sinnvoll. Diese können eine Ventilation zur einstellbaren Rauchgasströmung erfordern und bieten damit eine sinnvolle Kombinationsmöglichkeit der Rußpartikelfilterung mit der erfindungsgemäßen Ventilation. Die automatische Aktivierung des Ventilators (19) erfolgt durch die Steuerung (5) in Abhängigkeit der gewünschten Strömungsgeschwindigkeit (22) im Rauchgasrohr (28). Als Stellgröße am Reglerausgang wird hierbei ebenfalls eine veränderbare Ventilatordrehzahl verwendet. Diese Stellgröße ergibt sich in Abhängigkeit der als Sollwert vorgegebenen abzüglich der aus dem Strömungsistwert ermittelten Regeldifferenz der Rauchgasströmungsgeschwindigkeit (22) im Ofenrohrwärmetauscher (29). Die Regelung greift derart ein, dass der Drehzahlsollwert als Stellgröße bei zu kleiner Rauchgasströmungsgeschwindigkeit erhöht wird und in umgekehrter Richtung bei zu starker Rauchgasströmung der Drehzahlsollwert entsprechend reduziert wird. Eine Steuerung der Ventilatordrehzahl ohne geschlossenen Regelkreis der Strömungsgeschwindigkeit insbesondere ohne Strömungsistwerterfassung ist der Einfachheit halber ebenso möglich.

Regelung der Rauchgastemperatur mit der Stellgröße Ventilatordrehzahl und / oder Leitblechwinkelposition:
Für Ausführungsarten, die eine bestimmte oder minimale Rauchgastemperatur (9) benötigen, ist ebenso die Stellgröße Ventilatordrehzahl und / oder die Leitblechwinkelposition anwendbar. Eine mögliche Anwendung kann vorliegen, wenn eine minimale Schornsteintemperatur von vorzugsweise 55°C am Schornsteinkopf nicht unterschritten werden darf, um eine unerwünschte Versottung des Schornsteins zu vermeiden. Die automatische Aktivierung des Ventilators (19) erfolgt durch die Steuerung (5) in Abhängigkeit der gewünschten Rauchgastemperatur (9) im Rauchgasrohr (28) gemessen oder außerhalb am Rauchgasrohr als Rauchgasrohrtemperatur (9) gemessen. Die Bestimmung der Stellgröße ergibt sich in Abhängigkeit der als Sollwert vorgegebenen Temperatur abzüglich der aus dem Temperaturistwert (9) ermittelten Regeldifferenz. Die Regelung greift derart ein, dass der Drehzahlsollwert als Stellgröße bei zu kleiner Temperatur stetig oder in stufigen Schritten erhöht wird und in umgekehrter Richtung bei zu starker Temperatur der Drehzahlsollwert entsprechend reduziert wird. Die Stellgröße Leitblechwinkelposition (24) wirkt derart, dass bei zu niedrigen Rauchgastemperaturen (9) die Leitblechwinkelstellungen (24) stetig oder in stufigen Schritten zu erhöhen sind, um den Rauchgasstrom (22) zu erhöhen und bei zu hohen Rauchgastemperaturen (9) im umgekehrten Sinne die Leitblechwinkelstellungen (24) zu reduzieren. Beide Stellgrößen ergänzen sich damit hinsichtlich ihrer gewünschten Wirkung und sind kombinierbar.

Regelung der Strömungsgeschwindigkeit mit der Stellgröße Schwenkwinkel der Leitbleche:
Sollte bei Ventilationsanwendungen keine Drehzahlregelung oder Einstellung der Ventilatordrehzahl möglich sein, so bietet sich eine automatische Schwenkwinkeleinstellung der Leitbleche an. Die automatische Schwenkwinkeleinstellung der Leitbleche (24) erfolgt mittels der Steuerung (5), die einen Servoantrieb hinsichtlich seiner Drehwinkelposition einstellt. Dabei ist der Servoantrieb mit seinem Wellenausgang derart mit einer der Leitblechwellen am Drehhebel 1 oder Drehhebel 2 mechanisch verbunden, dass seine aktuelle Drehwinkelposition die Schwenkwinkel der Leitbleche bestimmt. Die Winkeleinstellung erfolgt in Abhängigkeit der als Strömungssollwert vorgegebenen und abzüglich der aus dem Strömungsistwert ermittelten Regeldifferenz der Rauchgasströmungsgeschwindigkeit (22) im Ofenrohrwärmetauscher (29) derart, dass der Leitblechwinkel (24) als Stellgröße bei zu kleiner Rauchgasströmungsgeschwindigkeit (22) erhöht wird und im umgekehrter Richtung bei zu hoher Rauchgasströmungsgeschwindigkeit der Leitblechwinkel (24) entsprechend reduziert wird.

Regelung der Ofenrohrwärmetauscherleistung mit der Stellgröße Schwenkwinkel der Leitbleche:
Sollte bei Ventilationsanwendungen keine Drehzahlregelung oder Einstellung der Ventilatordrehzahl möglich sein, so bietet sich eine automatische Schwenkwinkeleinstellung der Leitbleche an. Die automatische Schwenkwinkeleinstellung der Leitbleche (24) erfolgt mittels der Steuerung (5), die einen Servoantrieb hinsichtlich seiner Drehwinkelposition einstellt. Dabei ist der Servoantrieb mit seinem Wellenausgang derart mit einer der Leitblechwellen am Drehhebel 1 oder Drehhebel 2 mechanisch verbunden, dass seine aktuelle Drehwinkelposition die Schwenkwinkel der Leitbleche bestimmt. Die Winkeleinstellung erfolgt in Abhängigkeit der als Leistungssollwert vorgegebenen und abzüglich der aus dem Leistungsistwert ermittelten Regeldifferenz der Ofenrohrwärmetauscherleistung derart, dass der Leitblechwinkel (24) als Stellgröße bei zu kleiner Wärmetauscherleistung erhöht wird und im umgekehrter Richtung bei zu hoher Wärmetauscherleistung entsprechend reduziert wird.

Regelung der Ofenrohrwärmetauscherleistung oder der Strömungsgeschwindigkeit mit der Stellgröße Ventilatordrehzahl und einem Drehzahlkorrekturwert aus der aktuellen Schwenkwinkelposition der Leitbleche:
Zur Erhöhung der Regelgenauigkeit bei der Regelung der Ofenrohrwärmetauscherleistung oder der Strömungsgeschwindigkeit mit der Stellgröße Ventilatordrehzahl wird vorzugsweise ein Drehzahlkorrekturwert der Drehzahlstellgröße hinzu addiert oder als Faktor multipliziert, der in Abhängigkeit der aktuellen Leitblechwinkelposition (24) bestimmt wird. Die Bestimmung dieser Korrekturgröße kann anhand einer mathematischen Formel berechnet werden, oder anhand von Erfahrungswerten ermittelt werden, oder die sich aus einer empirischen Funktion ergeben und in einer Tabelle hinterlegt werden.

### Parallele Wärmekreiskopplung gemäß Fig.1

Das Ausführungsbeispiel, das nicht Teil der Erfindung ist, verbindet den solaren Wärmekreis (1) mittels paralleler Kopplung mit dem Ofenwärmekreis (2) unter Verwendung von Solarflüssigkeit als Wärmeträger. Da die aktuelle zu nutzende Wärmeleistung der beiden gleichrangigen Wärmequellen möglichst hoch sein soll, können beide Wärmekreise bei jeweils genügend zur Verfügung stehender Wärmeenergie gleichzeitig aktiviert werden. Jeder Wärmekreis (1, 2) verfügt über eine eigene Umwälzpumpe (10, 11). Die parallelen Wärmekreise können damit unabhängig voneinander durch die Steuerung (5) aktiviert werden. Für die Umwälzpumpen (10, 11) lassen sich stufig veränderbare Pumpendrehzahlen durch eine manuelle Einstellung während der Inbetriebnahme einstellen.

Die Parallele Wärmekreiskopplung zur Wärmeübertragung in einen Wärmespeicher (3) erfolgt im Ausführungsbeispiel über einen Wärmetauscher (4) mit unabhängig voneinander gesteuerten Medienflüssen (14, 15 und 31). Die Steuerungslogik und die hydraulische Anlagenstruktur bilden eine zusammengehörige Funktionseinheit.

Darüber hinaus lassen sich mittels der Einstellung der für jeden Wärmekreis (1, 2) zugehörigen Durchflussmengenbegrenzer (20, 21) die Medienkreiswiderstande bzw. Medienfließgeschwindigkeiten (14, 15) für jeden Wärmekreis (1, 2) separat einstellen. Die Einstellung der Medienkreiswiderstände (20, 21) erfolgt ebenfalls durch eine manuelle Einstellung während der Inbetriebnahme.

Die Ein -und Ausschaltung der Stellglieder Umwälzpumpe (10) und Umwälzpumpe (11) erfolgt temperaturabhängig mittels der Steuerung (5), die ein Signal (17) zur Ansteuerung der Umwälzpumpe (10) sowie ein Signal (18) zur Ansteuerung der Umwälzpumpe (11) ausgibt. Die Steuerung (5) aktiviert die Stellglieder der parallelen Wärmekreise in Abhängigkeit der Medientemperaturen der Wärmequellen (8, 9) und der Medientemperatur im Wärmespeicher (7).

Dabei sind insbesondere folgende 4 Betriebszustände vorgesehen:
- Deaktivierung der Wärmekreisläufe 1 und 2
- Aktivierung Wärmekreislauf 1
- Aktivierung Wärmekreislauf 2
- Aktivierung der Wärmekreisläufe 1 und 2

Erfolgt die Aktivierung nur einer Wärmequelle, so verhindern Rückschlagventile (12 bzw. 13) einen unerwünschten Medienfluss (14 und 15) zwischen den parallelen Wärmekreisen (1 oder 2).

Der Wärmekreislauf (2) wird durch die Einschaltung des Stellorgans (11) bzw. durch das Steuersignal (19) aktiviert. Durch das geöffnete Rückschlagventil (13) ergibt sich der Medienfluss (15) und (16). Da das in dem Wärmekreislauf 1(1) befindende Rückschlagventil (12) durch das inaktive Stellorgan (10) geschlossen ist, tritt kein Medienfluss (14) auf.

Der Wärmekreislauf (1) ist aktiv, wenn das Stellorgan (10) eingeschaltet ist und das Rückschlagventil (12) durch den aufgebauten Druck des Stellorgans (10) zwangsweise geöffnet wird und sich dadurch der Medienfluss (14) und (16) einstellt. Die Steuerung (5) aktiviert das Stellorgan (10) mittels Einschaltung des Steuersignals (18). Da das in dem Wärmekreislauf 2 (2) befindende Rückschlagventil (13) durch das inaktive Stellorgan (11) geschlossen ist, tritt kein Medienfluss (15) auf.

### Inbetriebnahmevorgaben

Aus Sicherheitsgründen werden die Umwälzpumpen (10) und / oder (11) nur eingeschaltet, falls die max. Wassertemperatur im Speicher (7) nicht überschritten wird. Der parametrierbare max. Temperaturwert liegt insbesondere bei max. 95°C.

Zur Einstellung der optimalen Betriebsparameter wird für jeden Wärmekreis (1, 2) eine eigene schaltbare, drehzahlveränderbare Umwälzpumpe (10, 11) mit z.B. drei manuell einstellbaren Grunddrehzahlen zur Medienflusseinstellung verwendet. Darüber hinaus lassen sich mittels der Einstellung der für jeden Wärmekreis zugehörigen Durchflussmengenbegrenzer (20, 22) die Medienkreiswiderstande einstellen, so dass sich in der Kombination unabhängig voneinander die Medienfließgeschwindigkeiten einstellen lassen.

Die optimalen Betriebsparameter zur Einstellung der Fördermenge und Förderleistung der Parallelwärmekreise während der Inbetriebnahme wurden anhand der anlagenspezifischen und betriebsbedingten Anforderungen durchgeführt. Die Medienflüsse der Wärmekreisläufe (1,2) sind vorzugsweise bei 1,5 Liter / Minute einzustellen, wobei die beiden Umwälzpumpen (10, 11) vorzugsweise in der kleinsten Leistungsstufe bei ca. 40 Watt Leistungsaufnahme einzustellen sind. Die kleinste Leistungsstufe beinhaltet auch den insgesamt niedrigsten Energieverbrauch für den notwendigen Medientransport zur Wärmeübertragung.
Eine optimale Einstellung der Medienflüsse liegt insbesondere vor, wenn die Medienflüsse der Wärmekreise in etwa in der gleichen Größenordnung liegen. Ebenfalls sollten dabei die Förderleistungen der Umwälzpumpen ungefähr gleiche Werte aufweisen.
Insbesondere hat sich während des Betriebes gezeigt, dass diese gewählte Einstellung der Medienflüsse eine ungewollte Temperaturbeeinflussung des jeweils eingeschalteten Wärmekreises auf den zeitgleich ausgeschalteten Wärmekreis verhindert.

Aktivierung der Wärmekreise in Abhängigkeit der zugehörigen Temperaturistwerte

Im Ausführungsbeispiel aktiviert die Steuerung (5) die Wärmekreise (1 und / oder 2) anhand eines Temperaturvergleichs zwischen den parallelen Wärmekreisen derart, dass der Wärmekreis oder die Wärmekreise eingeschaltet werden, die über einen höheren Temperaturistwert (8 und /oder 9) im Vergleich zur Wärmespeichertemperatur (7) aufweisen. Zur Realisierung des Ausführungsbeispiels ist es erforderlich, einen Temperaturistwertgeber (7) im unteren Bereich des Wärmespeichers (3) bzw. im örtlichen Bereich des Wärmetauschers (4) zu installieren.

Aktivierung Wärmekreis 1:
Der im Parallelwärmekreis 1 erfasste Temperaturistwert (8) wird mit der Temperatur im unteren Wärmespeicherbereich (7) verglichen. Falls die Vorlauftemperatur des Parallelwärmekreises 1 (8) größer ist als die Temperatur im unteren Wärmespeicherbereich (7), so wird die Umwälzpumpe (10) des Parallelwärmekreises 1 (1) mittels der Stellgröße (17) eingeschaltet und der Wärmekreislauf (14) und (16) aktiviert. Falls die Vorlauftemperatur des Parallelwärmekreises 1 (8) kleiner ist als die Temperatur im unteren Wärmespeicherbereich (7), so wird die Umwälzpumpe (10) des Parallelwärmekreises 1 (1) mittels der Stellgröße (17) ausgeschaltet und der Wärmekreislauf (14) und (16) ist nicht aktiv.

Aktivierung Wärmekreis 2:
Der im Parallelwärmekreis 2 erfasste Temperaturistwert (9) wird mit der Temperatur im unteren Wärmespeicherbereich (7) verglichen. Falls die Vorlauftemperatur des Parallelwärmekreises 2 (9) größer ist als die Temperatur im unteren Wärmespeicherbereich (7), so wird die Umwälzpumpe (11) des Parallelwärmekreises 2 (2) mittels der Stellgröße (18) eingeschaltet und der Wärmekreislauf (15) und (16) aktiviert. Falls die Vorlauftemperatur des Parallelwärmekreises 2 (9) kleiner ist als die Temperatur im unteren Wärmespeicherbereich (7), so wird die Umwälzpumpe (11) des Parallelwärmekreises 2 (2) mittels der Stellgröße (18) ausgeschaltet und der Wärmekreislauf (15) und (16) ist nicht aktiv.

Gleichzeitige Aktivierung der Wärmekreise 1 und 2:
Es sind beide Umwälzpumpen (10 und 11) gleichzeitig aktiv, falls beide Temperaturistwerte (8 und 9) größer sind als die Temperatur im unteren Wärmespeicherbereich (7). In diesem Fall leisten beide Wärmekreise (1 und 2) einen nennenswerten Beitrag zur Wärmeerzeugung und es addieren sich die aktuellen Leistungen der Wärmequellen (1, 2). Daher eignet sich das Ausführungsbeispiel insbesondere zur Kopplung von Wärmekreisen, falls eine möglichst hohe Wärmeleistung erzielt werden soll.

Aufgrund der unterschiedlichen Anwendungsfälle ergeben sich mehrere Ausführungsarten der parallelen Wärmekreiskopplungen.

Ausführungsart mit Aktivierung nur einer Wärmequelle der Wärmekreise 1 oder 2:

Die Wärmequellen 1 und 2 werden gleichrangig verwendet. Es wird die Wärmequelle verwendet, welche über eine höhere Medientemperatur (8 oder 9) im Vergleich zu der Medientemperatur im Wärmespeicher (7) verfügt. Es kann nur einer der Wärmekreise (14 oder 15) gleichzeitig aktiviert sein, um ungewollte Temperaturübertragungen zwischen den Wärmekreisen (14 bzw. 15) auszuschließen. Der Medienkreis (14 oder 15), der den höheren Temperaturistwert (8 oder 9) aufweist, wird mittels einer der beiden Umwälzpumpen (10 oder 11) aktiviert. Diese Ausführungsart eignet sich für Anwendungen bei denen keinesfalls eine Wärmeübertragung zwischen den Wärmequellen stattfinden soll, insbesondere bei Anwendungen bei denen keine Wärmeenergie z. B. von einer Ofenwärmequelle in Solarmodule übertragen werden darf, da die Solarmodule außen auf dem Dach angebracht sind. Diese Ausführungsart unterbindet damit vollständig einen Energieausgleich zwischen den Wärmekreisen.
Wesentliche Voraussetzung für die voneinander unabhängige Aktivierung der Wärmekreise (1,2) ist der dargestellte Einbau der Umwälzpumpen (10) und (11) einschließlich der im Hydraulikschema in Fig. 1 dargestellten Rückschlagventile (12) und (13). Die aktive Umwälzpumpe (10) kann nur das Rückschlagventil (12) öffnen und das Rückschlagventil (13) bleibt dabei geschlossen. Die aktive Umwälzpumpe (11) hingegen kann nur das Rückschlagventil (13) öffnen und das Rückschlagventil (12) bleibt dabei im umgekehrten Sinne geschlossen.

### Ausführungsart Ofenwärmekreis als Sekundärsystem

In dieser Ausführungsart wird der Ofenwärmekreis (2) als Sekundärsystem zur Heizung und der Warmwassererzeugung verwendet. Der Wärmekreis (1) bildet dabei das parallel gekoppelte Primärsystem. Die Ausführungsart eignet sich besonders zur Kopplung von Wärmekreisen, die von einer kontinuierlich zur Verfuegung stehenden Energiequelle (Ölheizung, Gasheizung, Wärmepumpen, Fernwärme, etc.) des Wärmekreises 1 (1) sowie einer diskontinuierlich arbeitenden Energiequelle (Kaminofen, Kachelofen, Solarheizung, etc.) des Wärmekreises 2 (2) versorgt werden. Die Steuerung (5) kann unabhängig von der vorhandenen Steuerung des Primärsystems ausgeführt werden. Daher eignet sich das Ausführungsbeispiel insbesondere für Anlagenerweiterungen, bei denen ein nachträglicher Ofenwärmekreis nachgerüstet wird, ohne die vorhandene Steuerung des Primärsystems anpassen oder verändern zu müssen. Es sind auch Anwendungen vorteilhaft, bei denen eine bestimmte Temperatur nicht unterschritten werden darf. Insbesondere bei der Trinkwassererwärmung ist diese Vorgehensweise sinnvoll, wenn die Temperatur in einem Warmwasserspeicher vorzugsweise mindestens 60°C betragen soll, um die erforderliche Legionellenabtötung zu gewährleisten. Der Temperatursollwert (6) bildet den Grenzwert der Einschalttemperatur zur Wärmeversorgung des Wärmekreises (1). Der Temperatursollwert kann eine parametrierbare Konstante oder ein einstellbarer Wert sein.

### Aktivierung Wärmekreis 1 (1):

Falls der Temperaturistwert (7) kleiner ist als der Temperatursollwert (6), so erfolgt die Wärmeversorgung über den Wärmekreis 1 (1), der mittels Steuersignal (17) und dem zugehörigen Stellglied (10) aktiviert wird. Hierdurch wird der Medienfluss über die Medienkreise (14) und (16) geführt. Die Wärmeversorgung des Grundsystems (1) wird ausgeschaltet, wenn der Temperaturistwert (7) größer ist als der Temperatursollwert (6).

### Aktivierung Wärmekreis 2 (2):

Der am Parallelwärmekreis 2 erfasste Temperaturistwert (9) wird mit der Solltemperatur (6) verglichen. Falls der Temperaturistwert (9) größer ist als die Solltemperatur (6), so wird das Stellorgan (11) des Parallelwärmekreises 2 (2) mittels Ansteuerung der Stellgröße (18) eingeschaltet und damit der Wärmekreislauf (15) und (16) aktiviert. Unterhalb der vorgegebenen Solltemperatur (6) ist der Parallelwärmekreis 2 ausgeschaltet. Die oberhalb der Solltemperatur (6) auftretenden Energieanteile werden daher vom Parallelwärmekreis 2 (2) übernommen. Sollte der Steuerung (5) der Temperaturistwert (7) zum Temperaturvergleich mit dem Temperaturistwert (9) zur Verfügung stehen, so wäre diese Vorgehensweise im Vergleich zur Abfrage mit der Solltemperatur (6) effektiver und damit vorteilhafter in der Anwendung.

### Ausführungsart Ofenwärmekreis als Primärsystem

Alternativ kann der Ofenwärmekreis (2) als Primärsystem zur Heizung und der Warmwassererzeugung verwendet werden. Der Wärmekreis (1) bildet dabei das parallel gekoppelte Sekundärsystem. Die Ausführungsart eignet sich besonders zur Kopplung von Wärmekreisen, die von einer kontinuierlich zur Verfügung stehenden Ofenwärmequelle (Kachelofen, Kaminofen, Pelletheizung, etc.) des Wärmekreises 2 (2) sowie einer diskontinuierlich arbeitenden Energiequelle (Solarheizung, etc.) des Wärmekreises 1 (1) versorgt werden. Der Temperatursollwert (6) bildet den Grenzwert der Einschalttemperatur zur Wärmeversorgung des Ofenwärmekreises (2). Der Temperatursollwert kann eine parametrierbare Konstante oder ein einstellbarer Wert sein.

Aktivierung Ofenwärmekreis 2 (2): Falls der Temperaturistwert (7) im Wärmespeicher (3) kleiner ist als der Temperatursollwert (6), so erfolgt die Wärmeversorgung über den Wärmekreis 2 (2) der mittels Steuersignal (18) und dem zugehörigen Stellglied (11) aktiviert wird. Hierdurch wird der Medienfluss über die Medienkreise (15) und (16) geführt. Die Wärmeversorgung des Grundsystems (1) wird ausgeschaltet, wenn der Temperaturistwert (7) größer ist als der Temperatursollwert (6).

Aktivierung Wärmekreis 1 (1): Der am Parallelwärmekreis 1 erfasste Temperaturistwert (8) wird mit der Solltemperatur (6) verglichen. Falls der Temperaturistwert (8) höher ist als die Solltemperatur (6), so wird das Stellorgan (10) des Parallelwärmekreises 1 (1) mittels Ansteuerung der Stellgröße (17) eingeschaltet und damit der Wärmekreislauf (14) und (16) aktiviert. Unterhalb der vorgegebenen Solltemperatur (6) ist der Parallelwärmekreis 1 ausgeschaltet. Die oberhalb der Solltemperatur (6) auftretenden Energieanteile werden daher vom Parallelwärmekreis 1 (1) übernommen. Sollte der Steuerung (5) der Temperaturistwert (7) zum Temperaturvergleich mit dem Temperaturistwert (8) zur Verfügung stehen, so wäre diese Vorgehensweise im Vergleich zur Abfrage mit der Solltemperatur (6) effektiver und damit vorteilhafter in der Anwendung.

### Vorteile der Erfindung

Die Verwendung der schwenkbaren integrierten Leitbleche einschließlich der Ventilation reduziert die Wärmeverluste des Ofens bezüglich der Wärmeenergie, die ungenutzt in den Schornstein gelangt, da im Ofen höhere Verbrennungstemperaturen entstehen und eine wesentlich höhere Ausnutzung der Rauchgasabwärme vorliegt als bei den bekannten Ofenrohrwärmetauschern. Die Wirkungsgradverbesserung basiert auf einer höheren Reibung der Rauchgase im gasförmigen Medienbereich. Die schwenkbaren Leitbleche lenken das Rauchgas als mechanisches Hindernis um, erzeugen dabei eine turbulente Rauchgasströmung, die die erhöhte Reibung erzeugt. Der Einsatz der Ventilation erzeugt in Verbindung mit den geschwenkten Leitblechen eine Druckerhöhung im Rauchgasrohr, einen Anstieg der Strömungsgeschwindigkeit, stärkere Turbulenzen und damit eine weitere zusätzliche Reibung im gasförmigen Medienraum und erhöht damit nochmals den Wirkungsgrad des gesamten Ofens.

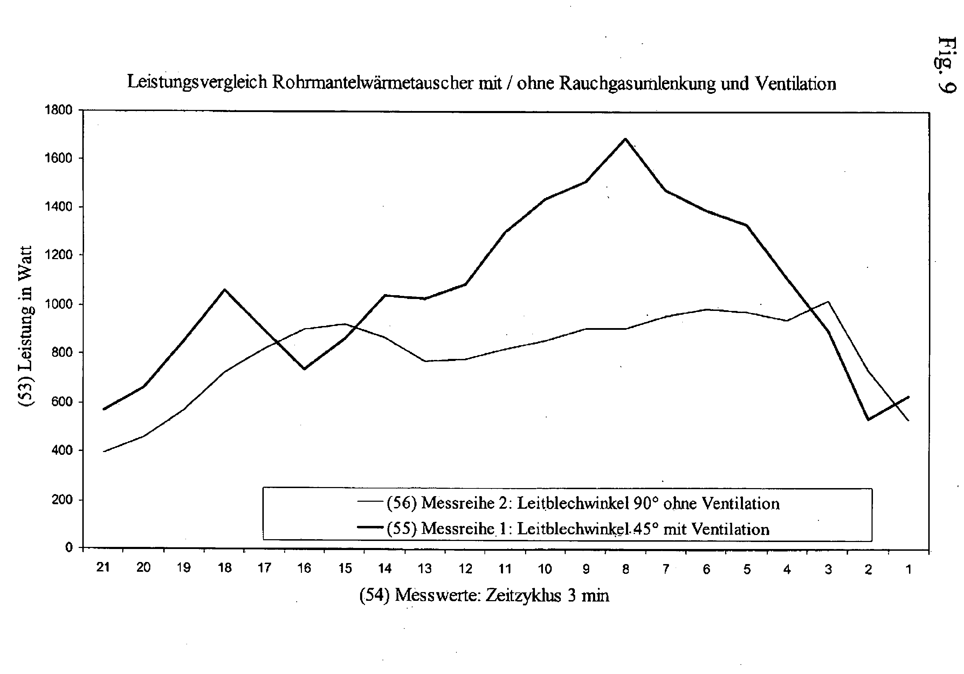

Die Wirkungsgraderhöhung ist in der Fig.9 grafisch anhand zweier Leistungskurven (55, 56) nachgewiesen, die zeitlich hintereinander erfasst wurden und zeitgleich zueinander dargestellt sind. Es wurden zwei Testläufe mit jeweils 2kg Fichtenholz bei zuvor angeheiztem Kaminofen durchgeführt. Der Holzvorrat wurde je Testlauf in einem Zeitraum von ca. 60 min verbrannt und die dabei aufgetretenen Ofenrohrwärmetauscherleistungen (53) mittels der Sensorik (32, 33, 34) gemessen und mit Hilfe der Steuerung (5) zeitzyklisch berechnet. Der Ofenrohrwärmetauscher war außen um das Rauchgasrohr herum angeordnet und der Ventilator wurde im Handbetrieb ein- bzw. ausgeschaltet. Die Datenaufzeichnungen für die beiden Testläufe erfolgten im 3-Minuten Zeitzyklus (54). Der Abbrennvorgang für den Testlauf 2 wurde mittels händisch eingestellter Zufuhr der Verbrennungsluft derart eingestellt, dass sich in etwa die gleiche Abbrenndauer des Holzvorrates im Vergleich zum Testlauf 1 ergab, um die notwendige Vergleichbarkeit der Leistungsmessungen in einem definierten Zeitfenster bei gleichem Abbrand herzustellen. Zur Aufnahme der Messreihe 1 (55) war der Ventilator mit max. bzw. konstanter Leistung (20Watt) über den gesamten Messzeitraum eingeschaltet und die im Ofenrohrwärmetauscher eingebauten 4 Leitbleche auf den gleichen Leitblechwinkel von +45° eingestellt. Bei der Aufnahme der Messreihe 2 (56) war der Ventilator ausgeschaltet und die Leitblechwinkelstellung aller Leitbleche auf 90° eingestellt, so dass die Rauchgase unbeeinflusst im Rauchgasrohr entweichen konnten. Die Leistungssteigerung mit der Ventilation und der Leitblechwinkeleinstellung von 45° betrug bei den aufgezeigten Bedingungen abzüglich der Ventilatorstromverluste ca. 32% oder eine um ca. 250W höhere Ofenrohrwärmetauscherleistung.

Der Wärmetauscherwirkungsgrad wird darüber hinaus deutlich erhöht, falls eine größere effektive Wärmetauscheroberfläche vom gasförmigen in den flüssigen Medienraum vorliegt, die aus der allseitigen Umströmung des Wärmetauschers im Innenbereich des Rauchgasofenrohres entsteht. Durch diese Maßnahme wird eine Verdopplung der Wärmetauscheroberfläche erzielt, welche eine 2-fache Ofenrohrwärmetauscherleistung erwarten lässt.

Eine vorzugsweise strukturierte oder unplane Leitblechoberfläche verstärkt die Wirkungsgraderhöhung, da weitere Turbulenzen bzw. Verwirbelungen im gasförmigen Medienraum entstehen.

Die erfindungsgemäße Einrichtung und das Verfahren eignen sich insbesondere zur Kombination mit Einrichtungen zur Reduzierung von Rußpartikeln bei Öfen, welche eine zusätzliche Ventilation zur Einstellung einer konstanten Rauchgasströmung zur Wirkungsgradoptimierung benötigen. Zukünftig wird sich der Einsatz von Rußpartikelfiltern deutlich erhöhen, da seitens des Gesetzgebers unter Einhaltung bestimmter Fristen, der Einbau derartiger Filteranlagen für Ofenanlagen in Deutschland vorgeschrieben ist.

Durch die Einstellbarkeit des Rauchgasvolumenstromes mittels Vorgabe eines parametrierbaren oder gerechneten Drehzahlsollwertes für den Rauchgasventilator in Verbindung mit der Einstellbarkeit der schwenkbaren Leitblechen ist eine Verbrennungsregelung bei der Verwendung des Rauchgasrohrwärmetauschers möglich.

Fig.10, die nicht Teil der Erfindung ist, zeigt die Messkurvendarstellung einer Leistungsregelung unter Verwendung der Stellgröße Ventilator mit den Zuständen 'Ein' oder 'Aus'. Der Ventilator, der zur Regulierung der Ofenrohrwärmetauscherleistung diente, wurde für diese Messreihe konstant mit der max. Nenndrehzahl betrieben und bei der Überschreitung bzw. Unterschreitung definierter Leistungsgrenzen ein -oder ausgeschaltet. Das Regelprinzip arbeitete derart, dass bei zu geringer Ofenrohrwärmetauscherleistung die Sauerstoffzufuhr für den Verbrennungsvorgang erhöht wurde und im umgekehrten Regelsinn bei zu hoher Leistung mittels der Ventilatorfunktion verringert wurde. Der aktuelle Leistungsistwert ergab sich aus dem aktuellen Wärmetauschermedienfluss und der Temperaturdifferenz zwischen der Vorlauf -und Rücklauftemperatur des Ofenrohrwärmetauscherkreises. Die Datenaufzeichnung zeigt einen Testverlauf vom Anbrennvorgang, beginnend mit der Messung 1 und endend mit der Messung 136, mit dem der Verbrennungsvorgang und die Messwerteaufzeichnung wegen Brennholzmangels gezielt abgeschlossen wurden. Die Leistungsgrenzwerte zur Steuerung der Ventilation wurden im Ofenbetrieb anhand der anlagenspezifischen Wärmetauscherleistungen empirisch ermittelt und wie folgt festgelegt:
- P_Min_UG: 240Watt, Unterer Leistungsgrenzwert einschließlich der Hysterese zur Ausschaltung des Ventilators
- P_Min_OG: 300Watt, Einschaltleistung Ventilator
- P_Max_UG: 540Watt, unterer Grenzwert der Ausschaltleistung Ventilator einschließlich Hysterese
- P_Max_OG: 600Watt, oberer Grenzwert der Ausschaltleistung Ventilator Das aufgezeichnete Binärsignal 'Ventilator_Ein' zeigt den Ventilatorstatus, der während der Messungen in Bezug zu den aktuell gemessenen Ofenrohrwärmetauscherleistungen und der zugehörigen Grenzwerte durch die Regelung ermittelt wurde. Die Regelabweichungen von ca. +/-300Watt ergeben sich aus der Trägheit der Regelstrecke, insbesondere beim langsamen Abkühlvorgang nach der Ausschaltung des Ventilators. Die Wirksamkeit der Regelung ist eindeutig ersichtlich, da nach Einschaltung der Ventilation die Leistung ansteigt und nach Ausschaltung der Ventilation in umgekehrter Richtung sinkt und die Mittelwerte der Leistungen innerhalb der oberen Leistungsgrenzen im Sollwertbereich zwischen 540 -und 600 Watt liegen.

Es sind Anwendungen für die Warmwassererzeugung oder Heizungsunterstützung in häuslichen Heizungsanlagen vorteilhaft, welche zur Ausstattung von neuen Heizungsanlagen oder zum Zwecke der Anlagenerweiterung oder Modernisierung dienen.

Der integrierte Ofenrohrwärmetauscher ist für die Nutzung aller bekannten Ofenwärmequellen verwendbar. Insbesondere ist der Anschluss von offenen Kaminen, Kaminöfen, Kachelöfen, Pelletöfen oder Backöfen möglich.

Für die parallele Ankopplung an den Ofenwärmekreis lassen sich die bekannten Wärmequellen für Gebäude wie z.B. Ölheizungen, Gasheizungen, Fernheizsysteme, Wärmepumpen oder thermische Solaranlagen verwenden.

Die Verwendung der parallelen Wärmekreise wirkt sich insbesondere vorteilhaft für Kopplungen zwischen Solaranlagen und Öfen aus, da sie regenerative Energien in kombinierter Form optimal ausnutzt. Idealerweise wird tagsüber die Sonnenenergie genutzt bei anschließender abendlicher und nächtlicher ergänzender Nutzung eines Ofens unter Verwendung des regenerativen Brennstoffes Holz.

Durch die Verwendung nur eines Wärmetauschers zur Übertragung der Wärmeenergie der parallelen Wärmekreise in einen Wärmespeicher und der Verwendung einer Solarträgerflüssigkeit als Wärmeübertragungsmedium ist eine direkte Medienkopplung des Ofenrohrwärmetauschers mit einer thermischen Solaranlage möglich.

Die unabhängige Aktivierung und Einstellbarkeit der Medienflüsse in den parallelen Wärmekreisen ermöglicht die notwendigen Freiheitsgrade für eine reibungslose Inbetriebnahme und schnellen Optimierung der Wärmekreise und sichert stabile Betriebszustände.

Durch den modularen Aufbau des Ofenwärmekreises ist eine einfache, platzsparende und kostengünstige Konstruktion realisierbar. Die Geräteauswahl ist mit vormontierten Standardprodukten aus der thermischen Solartechnik ausführbar.

Bei der Verwendung einer solaren Wärmeübertragungsflüssigkeit ergeben sich Temperaturreserven hinsichtlich der Ausnutzung der Anlage bis zur Erreichung des Siedepunktes im Ofenwärmekreis. Da der Siedepunkt der solaren Wärmeträgerflüssigkeit bei ca. 150°C liegt, wird diese bei auftretenden Temperaturen zwischen 100°C und 150°C nicht verdampfen. Darüber hinaus lässt sich die solare Wärmeträgerflüssigkeit der erfindungsgemäßen Vorrichtung problemlos bis ca. 300°C erwärmen, ohne dass sie sich zersetzt.

### Bezugszeichenliste

- (1): Parallelwärmekreis 1 mit Wärmequelle 1, z.B. Thermische Solaranlage
- (2): Parallelwärmekreis 2 mit Wärmequelle 2, z.B. Kaminofen
- (3): Wärmespeicher
- (4): Wärmetauscher
- (5): Steuerung
- (6): Temperatursollwert Wärmekreis 1
- (7): Temperatursensor Wärmespeicher
- (8): Temperatursensor Parallelwärmekreis 1, Medientemperatur an der Wärmequelle 1
- (9): Temperatursensor Parallelwärmekreis 2, Medientemperatur der Wärmequelle 2 (Rauchgastemperatur oder Rauchgasrohrtemperatur)
- (10): Stellglied für Parallelwärmekreis 1, insbesondere Umwälzpumpe mit der Einstellung von 3 verschiedenen Drehzahlen oder stufenlos einstellbar
- (11): Stellglied für Parallelwärmekreis 2, insbesondere Umwälzpumpe mit der Einstellung von 3 verschiedenen Drehzahlen oder stufenlos einstellbar
- (12): Rückschlagventil zur Medienflusssteuerung, Parallelwärmekreis 1
- (13): Rückschlagventil zur Medienflusssteuerung, Parallelwärmekreis 2
- (14): Medienflussrichtung Parallelwärmekreis 1 aktiv
- (15): Medienflussrichtung Parallelwärmekreis 2 aktiv
- (16): Medienflussrichtung bei aktivem Parallelwärmekreis 1 oder aktivem Parallelwärmekreis 2
- (17): Stellgliedansteuerung Parallelwärmekreis 1
- (18): Stellgliedansteuerung Parallelwärmekreis 2
- (19): Elektromotorischer Ventilator, Stellgröße Ventilatordrehzahl
- (20): Durchflussmengenbegrenzer für den Wärmekreis 1
- (21): Durchflussmengenbegrenzer für den Wärmekreis 2
- (22): Rauchgasströmung im gasförmigen Wärmeträgermedium, Rauchgasströmungsgeschwindigkeit
- (23): Reinigungsöffnung mit Deckel und Flügelschraube
- (24): Einstellbarer Winkelbereich der schwenkbaren Leitbleche, Stellgröße Leitblechwinkelposition
- (25): Messtasche für Temperatursensor
- (26): Vorlauf, VL
- (27): Rücklauf, RL
- (28): Rauchgasabzugsrohr mit Wandanschluss
- (29): Ofenrohrwärmetauscher, alle Bauformen eingeschlossen
- (30): Entlüftungsventil
- (31): Anschlussmöglichkeit für weitere parallele Wärmequellen
- (32): Sensor Durchflussmessung für Leistungsberechnung
- (33): Vorlauftemperatur für Leistungsberechnung
- (34): Rücklauftemperatur für Leistungsberechnung
- (35): Drehhebel 1 zum Schwenken der Leitbleche
- (36): Drehhebel 2 zum Schwenken der Leitbleche
- (37): Schwenkbare Leitbleche mit in der Mitte angebrachter Schwenkachse
- (38): Scharniere mit Drehpunkt zum Schwenken der Leitbleche
- (39): Ansicht Schnittfläche A: Leitblechwinkel = 0 °
- (40): Ansicht Schnittfläche A: Leitblechwinkel = 90 °
- (41): Schwenkhebelstange 1 zur gleichzeitigen bzw. gleichförmigen Einstellung der Leitbleche
- (42): Schwenkhebelstange 2 zur gleichzeitigen bzw. gleichförmigen Einstellung der Leitbleche
- (43): Verbindungsstange zur synchronen Schwenkfunktion aller Leitbleche
- (44): Raum für Rauchgasstrom im Innenbereich des Wärmetauschers (innerer Hohlkörperbereich)
- (45): Raum für Rauchgasstrom zwischen der Innenfläche des Rauchgasabzugsrohrs und der Außenfläche des Wärmetauschers (äußerer Hohlkörperbereich)
- (46): Außenblech Rauchgasabzugsrohr
- (47): Ofen
- (50): Ofenrohrwärmetauscher, Ausführung mit innen eingesetztem Flüssigkeitsmantelwärmetauscher
- (51): Flüssigkeitsmantel zwischen Außen -und Innenwandrohr
- (52): Ofenrohrwärmetauscher, Ausführung mit innen eingesetzter Rohrschlange
- (53): Ofenrohrwärmetauscherleistung in Watt
- (54): Messungen: Zeitzyklus 3 min
- (55): Messreihe 1: Leitblechwinkelposition 45° mit Ventilation
- (56): Messreihe 2: Leitblechwinkelposition 90° ohne Ventilation
- (57): Mechanischer Anschlusspunkt für einen Servoantrieb bzw. Schwenkantrieb an einer Schwenkachse der Leitbleche

## Patentansprüche

1. Vorrichtung zur Übertragung der Wärme aus einer Ofenwärmequelle (2), wobei ein Rauchgasstrom (22) durch mehrere um die eigenen Mittellängsachsen schwenkbare Leitbleche (37) beeinflusst werden kann, wobei die Leitbleche (37) in einem Rauchgasrohr (28) räumlich hintereinander in Längsrichtung angeordnet sind, **dadurch gekennzeichnet, dass** die Wärme auf einen von der Ofenwärmequelle (2) vollständig umströmten Wärmetauscher (29) der innerhalb des Rauchgasabzugrohres (28) angeordnet ist, übertragbar ist, wobei der Wärmetauscher (29) zwischen einem inneren Hohlkörperbereich (44) und einem äußeren Hohlkörperbereich (45) des Rauchgasabzugrohres (28) angeordnet ist und wobei die Leitbleche (37) in dem inneren Hohlkörperbereich (44) derart angeordnet sind, dass der Rauchgasstrom (22) in Abhängigkeit der gleichen oder unterschiedlichen Schwenkwinkel (24) von Leitblech (37) zu Leitblech (37) in einer Schlangenlinienform mittels einer händischen oder automatischen Schwenkwinkeleinstellung umlenkbar ist, wobei eine Leitblechwinkelstellung 90 Grad einem nahezu vollständig geöffneten inneren Hohlkörperbereich (44) entspricht und wobei eine Leitblechwinkelstellung 0 Grad einem nahezu vollständig geschlossenen inneren Hohlkörperbereich (44) entspricht, wobei die Leitbleche (37) zwischen den Leitblechwinkelstellungen 0 Grad und 90 Grad verstellbar sind.

2. Vorrichtung zur Übertragung der Wärme aus einer Ofenwärmequelle (2) nach Patentanspruch 1, **dadurch gekennzeichnet,**
**dass** die Winkeleinstellung (24) der schwenkbaren Leitbleche (37) einzeln oder gemeinsam mittels mechanisch gekoppelter Verbindungselemente erfolgt insbesondere unter Verwendung mindestens eines Drehhebels (35 und / oder 36) zum Schwenken der mittels der Schwenkhebelstangen (41 und / oder 42) verbundenen Leitbleche (37) um die eigene Drehachse sowie insbesondere unter zusätzlicher Verwendung der Verbindungsstange (43) zur mechanischen Verbindung der Drehhebel (35 und 36) über die zwei Drehpunkte (35, 43), die derart miteinander verbunden eine vorzugsweise synchrone Leitblechwinkeleiristellung ermöglichen, jedoch mit umgekehrten Winkelvorzeichen (24) von einem Leitblech (37) zum nächsten.

3. Vorrichtung zur Übertragung der Wärme aus einer Ofenwärmequelle (2) nach Patentanspruch 1, **dadurch gekennzeichnet,**
**dass** ein aus Metall bestehender Ofenrohrwärmetauscher (29) zur Übertragung des flüssigen Wärmeträgermediums verwendet wird, der aus mehreren Rohrstäben besteht, die miteinander mittels Verwendung mehrerer 180°-Rohrbögen, die vorzugsweise verschweißt miteinander verbunden mehrere Rohrschlaufen ergeben, die in Reihe miteinander verbunden einen kreisförmigen Hohlkörper ergeben, der am Anfang eine Anschlussmuffe für den Rücklauf (27) und am Ende eine Anschlussmuffe für den Vorlauf (26) erhält.

4. Vorrichtung zur Übertragung der Wärme aus einer Ofenwärmequelle (2) nach Patentanspruch 1, **dadurch gekennzeichnet,**
**dass** ein aus Metall bestehender Ofenrohrwärmetauscher (29) zur Übertragung des flüssigen Wärmeträgermediums verwendet wird, der aus mehreren Rohrstäben besteht, die mittels zweier jeweils an den Anfängen und an den Enden der Rohrstäbe angebrachter Hohlringe, vorzugweise verschweißt miteinander verbunden werden, so dass sich ein kreisförmiger Hohlkörper ergibt, wobei ein Hohlring eine Anschlussmuffe für den Rücklauf (27) und der andere eine Anschlussmuffe für den Vorlauf (26) erhält.

5. Vorrichtung zur Übertragung der Wärme aus einer Ofenwärmequelle (2) nach Patentanspruch 1, **dadurch gekennzeichnet,**
**dass** ein aus Metall bestehender Ofenrohrwärmetauscher (29) zur Übertragung des flüssigen Wärmeträgermediums verwendet wird, der aus einer Rohrspirale (52) besteht, die sich durch ein kreisförmig gebogenes Rohr bildet und deren jede einzelne Windung vorzugsweise einen Luftspalt zur vollständigen Umströmung des gasförmigen Wärmeträgermediums aufweist.

6. Vorrichtung zur Übertragung der Wärme aus einer Ofenwärmequelle (2) nach Patentanspruch 1, **dadurch gekennzeichnet,**
**dass** ein aus Metall bestehender Ofenrohrwärmetauscher (29) zur Übertragung des flüssigen Wärmeträgermediums verwendet wird, der die Verwendung von Ofenwärmetauscherbauformen (50) einschließt, die über einen Flüssigkeitsmantel (51) zwischen zwei innen oder außen um das Rauchgasrohr herum (28) angebrachten Mantelrohren verfügen, durch welche die Wärmeträgerflüssigkeit fließt.

7. Vorrichtung zur Übertragung der Wärme aus einer Ofenwärmequelle (2) nach einem der Patentansprüche 1 bis 6, **dadurch gekennzeichnet,**
**dass** im Rauchgasabzugsrohr (28) oder im Kamin oder im Schornstein oder am Ende des Schornsteins oder nach dem Injektor-Prinzip neben dem Rauchgasabzugsrohr (28) oder vorzugsweise im Bereich der Luftzuführung des Ofens ein insbesondere elektromotorisch betriebener Ventilator (19) zur Verstärkung und / oder Regulierung der Rauchgasströmung (22) eingebaut ist.

8. Vorrichtung zur Übertragung der Wärme aus einer Ofenwärmequelle (2) nach den Patentansprüchen 2 bis 6, **dadurch gekennzeichnet,**
**dass** an mindestens einem der Drehhebel (35) oder (36) ein vorzugsweise elektromotorisch betriebener Servoantrieb (57) oder Schwenkantrieb (57) zur Einstellung der Leitblechwinkelpositionen angebaut ist.

## Claims

1. Device for transferring the heat from an ovenheat source (2), wherein a flue gas flow (22) can be influenced by several baffles (37) which are pivotable around their own central longitudinal axes, wherein the baffles (37) are arranged in a flue gas pipe (28) spatially one behind the other in the longitudinal direction, **characterised in that** the heat is transferable to a heat exchanger (29) flowed through completely by the oven heat source (2), said heat exchanger being arranged within the flue gas exhaust pipe (28), wherein the heat exchanger (29) is arranged between an inner hollow body region (44) and an outer hollow body region (45) of the flue gas exhaust pipe (28), and wherein the baffles (37) are arranged in the inner hollow body region (44) in such a way that the flue gas flow (22) is able to be redirectedin a serpentine shape by means of a manual or automatic pivot angle adjustment depending on the same or different pivotangles (24) from baffle (37) to baffle (37), wherein a baffle angular position of 90 degrees corresponds to an almost completely opened inner hollow body region (44), and wherein a baffle angular position of 0 degrees corresponds to an almost completely closed inner hollow body region (44), wherein the baffles (37) are adjustable between the baffle angular positions of 0 degrees and 90 degrees.

2. Device for transferring the heat from an oven heat source (2) according to claim 1, **characterised in that** the angle adjustment (24) of the pivotable baffles (37) occurs individually or together by means of mechanically coupled connection elements, in particular using at least one pivot lever (35 and/or 36) to pivot the baffles (37) connected by means of the pivot lever rods (41 and/or 42) around their own rotational axis, as well as in particular additionally using the connection rod (43) for mechanical connection of the pivot levers (35 and 36) via the two fulcrums (35, 43), which are connected to each other in such a way that they enable a preferably synchronous baffle angle adjustment, however with reversed angle signs (24) from one baffle (37) to the next.

3. Device for transferring the heat from an oven heat source (2) according to claim 1, **characterised in that** a stovepipe heat exchanger (29) consisting of metal is used to transfer the liquid heat transfer medium, said stovepipe heat exchangerconsisting of several pipes which are connected to one another, preferably welded to oneanother, by means of the use of several 180° pipe bends; several pipe loops results which are connected in series; a circular hollow body results which receives a connecting sleeve for the return flow (27) at the beginning and a connecting sleeve for the supply flow (26) at the end.

4. Device for transferring the heat from an oven heat source (2) according to claim 1, **characterised in that** a stovepipe heat exchanger (29) consisting of metal is used for transferring the liquid heat transfer medium, said stovepipe heat exchanger consisting of several pipes which are connected to one another, preferably welded, by means of two hollow rings attached to the beginnings and the ends of the pipes respectively, such that a circular hollow body results, wherein one hollow ring receives a connection sleeve for the return flow (27) and the other a connection sleeve for the supply flow (26).

5. Device for transferring the heat from an oven heat source (2) according to claim 1, **characterised in that** a stovepipe heat exchanger (29) consisting of metal is used for transferring the liquid heat transfer medium, said stovepipe heat exchanger consisting of a pipe coil (52) which is formed by a pipe bent in a circle and each individual winding of which preferably has a gap for the complete flow of the gaseous heat transfer medium.

6. Device for transferring the heat from an oven heat source (2) according to claim 1, **characterised in that** a stovepipe heat exchanger (29) consisting of metal is used for transferring the liquid heat transfer medium, said stovepipe heat exchanger including the use of oven heat exchanger designs (50) which have a liquid jacket (51) between two jacketed pipes attached around the flue gas pipe (28) on the inside or on the outside, through which jacketed pipes the heat transfer liquid flows.

7. Device for transferring the heat from an oven heat source (2) according to one of claims 1 to 6, **characterised in that** a ventilator (19), driven in particular by an electric motor, is installed in the flue gas exhaust pipe (28) or in the fireplace or in the chimney or at the end of the chimney or, according to the injector principle, next to the flue gas exhaust pipe (28) or preferably in the region of the air supply of the oven to reinforce and/or regulate the flue gas flow (22).

8. Device for transferring the heat from an oven heat source (2) according to claims 2 to 6, **characterised in that** a servo drive (57) or swivel drive (57), preferably driven by an electric motor, is attached toat least one of the rotational levers (35) or (36) to adjust the baffle angular positions.

## Revendications

1. Dispositif pour la transmission de la chaleur provenant d'une source de chaleur de poêle (2), un flux de gaz de fumée (22) pouvant être influencé par plusieurs tôles déflectrices (37) qui peuvent pivoter autour de leurs propres axes longitudinaux médians, les tôles déflectrices (37) étant agencées spatialement les unes derrière les autres dans le sens de la longueur dans un tuyau de gaz de fumée (28), **caractérisé en ce que** la chaleur peut être transmise à un échangeur de chaleur (29) qui est complètement enveloppé par la source de chaleur de poêle (2) et qui est agencé à l'intérieur du tuyau d'extraction de gaz de fumée (28), l'échangeur de chaleur (29) étant agencé entre une zone intérieure de corps creux (44) et une zone extérieure de corps creux (45) du tuyau d'extraction de gaz de fumée (28) et les tôles déflectrices (37) étant agencées de telle sorte dans la zone intérieure de corps creux (44) que le flux de gaz de fumée (22) peut être dévié en fonction des angles de pivotement (24) identiques ou différents de tôle déflectrice (37) en tôle déflectrice (37) suivant une forme sinueuse au moyen d'un réglage d'angles de pivotement manuel ou automatique, une position angulaire de tôle déflectrice de 90 degrés correspondant à une zone intérieure de corps creux (44) presque complètement ouverte et une position angulaire de tôle déflectrice de 0 degré correspondant à une zone intérieure de corps creux (44) presque complètement fermée, les tôles déflectrices (37) pouvant être bougées entre les positions angulaires de tôle déflectrice 0 degré et 90 degrés.

2. Dispositif pour la transmission de la chaleur provenant d'une source de chaleur de poêle (2) selon la revendication 1, **caractérisé en ce que** le réglage angulaire (24) des tôles déflectrices pivotantes (37) s'effectue individuellement ou conjointement au moyen d'éléments de liaison couplés mécaniquement, notamment en utilisant au moins un levier rotatif (35 et/ou 36) pour faire pivoter les tôles déflectrices (37) reliées au moyen des barres de levier pivotant (41 et/ou 42) autour de leur propre axe de rotation et notamment en utilisant en plus la barre de liaison (43) pour relier mécaniquement par l'intermédiaire des deux points de rotation (35, 43) les leviers rotatifs (35 et 36) qui, ainsi reliés entre eux, permettent un réglage angulaire de tôle déflectrice de préférence synchrone mais avec un angle de signe opposé (24) d'une tôle déflectrice (37) à la suivante.

3. Dispositif pour la transmission de la chaleur provenant d'une source de chaleur de poêle (2) selon la revendication 1, **caractérisé en ce qu'**on utilise pour la transmission du fluide d'échangeur de chaleur un échangeur de chaleur de tuyau de poêle (29) en métal qui est constitué de plusieurs barres tubulaires qui, reliées entre elles de préférence par soudage en utilisant plusieurs arcs tubulaires à 180°, forment plusieurs boucles tubulaires qui, reliées entre elles en série, forment un corps creux circulaire qui reçoit au début un embout de raccordement pour le retour (27) et à la fin un embout de raccordement pour l'aller (26).

4. Dispositif pour la transmission de la chaleur provenant d'une source de chaleur de poêle (2) selon la revendication 1, **caractérisé en ce qu'**on utilise pour la transmission du fluide d'échangeur de chaleur un échangeur de chaleur de tuyau de poêle (29) en métal qui est constitué de plusieurs barres tubulaires qui sont reliées entre elles de préférence par soudage au moyen de deux anneaux creux agencés respectivement aux débuts et aux fins des barres tubulaires de telle sorte qu'il en résulte un corps creux circulaire, un anneau creux recevant un embout de raccordement pour le retour (27) et l'autre un embout de raccordement pour l'aller (26).

5. Dispositif pour la transmission de la chaleur provenant d'une source de chaleur de poêle (2) selon la revendication 1, **caractérisé en ce qu'**on utilise pour la transmission du fluide d'échangeur de chaleur un échangeur de chaleur de tuyau de poêle (29) en métal qui est constitué d'une spirale tubulaire (52) qui est formée par un tube arqué en forme de cercle et dont chaque spire individuelle comporte de préférence une fente d'aération pour l'enveloppement complet du fluide gazeux d'échangeur de chaleur.

6. Dispositif pour la transmission de la chaleur provenant d'une source de chaleur de poêle (2) selon la revendication 1, **caractérisé en ce qu'**on utilise pour la transmission du fluide d'échangeur de chaleur un échangeur de chaleur de tuyau de poêle (29) en métal qui inclut l'utilisation de formes de construction d'échangeur de chaleur de poêle (50) qui disposent d'une enveloppe de fluide (51) entre deux tubes enveloppants qui sont agencés à l'intérieur ou à l'extérieur autour du tuyau de gaz de fumée (28) et par lesquels passe le fluide d'échangeur de chaleur.

7. Dispositif pour la transmission de la chaleur provenant d'une source de chaleur de poêle (2) selon l'une des revendications 1 à 6, **caractérisé en ce que**, pour amplifier et/ou réguler le flux de gaz de fumée (22), un ventilateur (19) fonctionnant notamment à l'aide d'un moteur électrique est placé dans le tuyau d'extraction de gaz de fumée (28) ou dans le poêle ou dans la cheminée ou à l'extrémité de la cheminée ou, selon le principe de l'injecteur, à côté du tube d'extraction de gaz de fumée (28) ou de préférence dans la zone d'entrée d'air du poêle.

8. Dispositif pour la transmission de la chaleur provenant d'une source de chaleur de poêle (2) selon les revendications 2 à 6, **caractérisé en ce que**, pour le réglage des positions angulaires de tôles déflectrices, une servocommande (57) ou un servomoteur de pivotement (57) fonctionnant de préférence à l'aide d'un moteur électrique est placé sur au moins l'un des leviers rotatifs (35) ou (36).
